(19) Europäisches Patentamt
European Patent Office
Office européen des brevets

(11) **EP 2 860 861 A2**

(12) **EUROPEAN PATENT APPLICATION**

(43) Date of publication:
**15.04.2015 Bulletin 2015/16**

(51) Int Cl.:
***H02M 1/00*** (2007.01)

(21) Application number: **14188271.2**

(22) Date of filing: **09.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.10.2013 JP 2013212025**

(71) Applicant: **Kabushiki Kaisha Yaskawa Denki Kitakyushu-shi, Fukuoka 806-0004 (JP)**

(72) Inventors:
• **Kume, Tsuneo**
  **Kitakyushu-shi, Fukuoka 806-0004 (JP)**
• **Hara, Hidenori**
  **Kitakyushu-shi, Fukuoka 806-0004 (JP)**
• **Yamanaka, Katsutoshi**
  **Kitakyushu-shi, Fukuoka 806-0004 (JP)**

(74) Representative: **Viering, Jentschura & Partner Patent- und Rechtsanwälte**
  **Grillparzerstrasse 14**
  **81675 München (DE)**

(54) **Current source inverter device**

(57) A current source inverter device (2) according to an embodiment includes an inverter (11) that supplies AC power to a number n (integer of 1 or greater) of AC motors (3) each having a number m (integer of 2 or greater) of windings per phase; and a controller (20) that controls the inverter and AC motor. The inverter includes a switching unit, in which a number $n \times m+1$ of switching elements (12) per phase are connected in series, and a number nxm of nodes among the switching elements are respectively connected with a number nxm of different windings with the same phase among the windings of the number n of the AC motors. The controller includes a mode selector (22) that selects at least one winding as a supply target of the AC power from the number nxm of the windings based on a rotation speed of the AC motor.

FIG. 1

**Description**

BACKGROUND OF THE INVENTION

1. Field of the Invention

The embodiments disclosed therein relate to current source inverter devices.

2. Description of the Related Art

There has been known a technology that switches a stator winding of an alternating-current (AC) motor from a low-speed winding to a high-speed winding by a winding switch if the rotation speed of the AC motor becomes high speed.
The technology reduces a counter voltage that is generated in the AC motor at high speed by switching the stator winding from the low-speed winding to the high-speed winding. Accordingly, the speed control range is expanded, and operation in a wide range from a low-speed region to a high-speed region becomes available (for example, see Japanese Patent No. 3948009).
However, the technology of the related art that switches the winding state of the AC motor uses, for example, a winding switch circuit. Further, a plurality of terminals and a plurality of wirings are provided for connection between the AC motor and the winding switch circuit. Therefore, there may be problems in viewpoints of reduction in size and reduction in weight of the AC motor.

SUMMARY OF THE INVENTION

An aspect of the disclosure is made in light of the above-described situation, and it is an object of the disclosure to provide a current source inverter device that can expand a speed control range for an alternating-current motor, by selecting a winding, to which power is supplied, in the inverter device, without switching a winding state of the alternating-current motor.
According to an aspect of the disclosure, there is provided a current source inverter device including an inverter and a controller. The inverter supplies alternating-current power to a number n (n being an integer of 1 or greater) of alternating-current motors each having a number m (m being an integer of 2 or greater) of windings per phase. The controller controls the inverter and the alternating-current motor. The inverter includes a switching unit, in which a number nxm+1 of switching elements per phase of the alternating-current motor are connected in series, and a number nxm of nodes among the switching elements are respectively connected with a number nxm of different windings with the same phase among the windings of the number n of the alternating-current motors. The controller includes a selector that selects at least one winding as a supply target of the alternating-current power from the number nxm of the windings based on a rotation speed of the alternating-current motor.

BRIEF DESCRIPTION OF THE DRAWINGS

Fig. 1 is a configuration diagram of a motor driving system including a current source inverter device according to a first embodiment.
Fig. 2 is another configuration diagram of the motor driving system.
Fig. 3 is an illustration showing a configuration example of a controller shown in Fig. 1.
Fig. 4 is an illustration showing a current source inverter device including an inverter having three-phase bridges.
Fig. 5 is an illustration in the form of space vectors expressing current of nine types of current paths as current vectors.
Fig. 6 is a relationship diagram of logical values of gate signals and current vectors.
Fig. 7 is an illustration showing a specific configuration example of a gate-signal output unit.
Fig. 8 is an illustration showing another specific configuration example of each phase-signal output unit.
Fig. 9 is an illustration showing the flow of current flowing from the U-phase to the V-phase in a first control mode.
Fig. 10 is an illustration showing current paths in the motor in a state shown in Fig. 9.
Fig. 11 is an illustration showing space vectors in the first control mode.
Fig. 12 is an illustration showing the flow of current flowing from the U-phase to the V-phase in a second control mode.
Fig. 13 is a configuration diagram of a controller of a motor driving system according to a second embodiment.
Fig. 14 is a configuration diagram of a mode selector shown in Fig. 13.
Fig. 15 is a relationship diagram of the rotation speed and the magnitude of a modulation signal.
Fig. 16 is an illustration showing an example of waveforms of a carrier signal, a modulation signal, a first mode signal, and a second mode signal.

Fig. 17 is a relationship diagram of the time ratio of the first control mode and the time ratio of the second control mode when the motor is accelerated.

Fig. 18 is a relationship diagram of the rotation speed and the output effective power of the motor.

Fig. 19 is a configuration diagram of a motor driving system according to a third embodiment.

Fig. 20 is an illustration showing a configuration example of a controller shown in Fig. 19.

Fig. 21 is an illustration showing a specific configuration example of a driving-output generator shown in Fig. 19.

Fig. 22 is a configuration diagram of a motor driving system according to a fourth embodiment.

Fig. 23 is an illustration showing a configuration example of a controller shown in Fig. 22.

Fig. 24 is a configuration diagram of a motor driving system according to a fifth embodiment.

Fig. 25 is an illustration showing a configuration example of a controller shown in Fig. 24.

DESCRIPTION OF THE EMBODIMENTS

Hereinafter, embodiments of current source inverter devices that are disclosed by the subject application are described in detail. It is to be noted that the disclosure is not limited to the embodiments described below.

1. First Embodiment

1.1. Motor Driving System

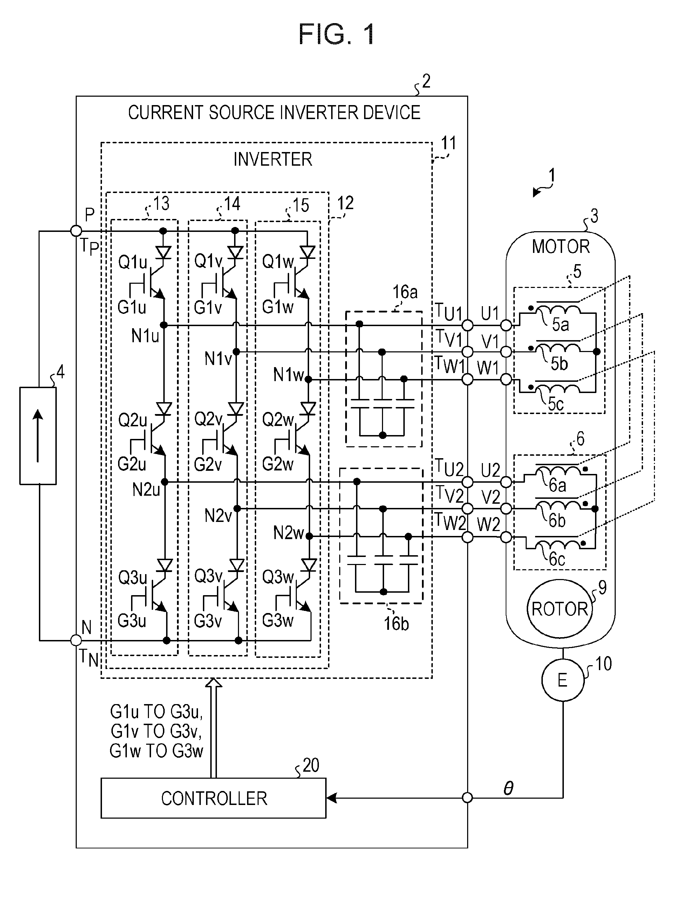

Fig. 1 is a configuration diagram of a motor driving system including a current source inverter device according to a first embodiment. A motor driving system 1 shown in Fig. 1 includes a current source inverter device 2, a three-phase alternating-current (AC) motor 3 (hereinafter, merely referred to as motor 3), a direct-current (DC) source 4, and a position sensor 10.

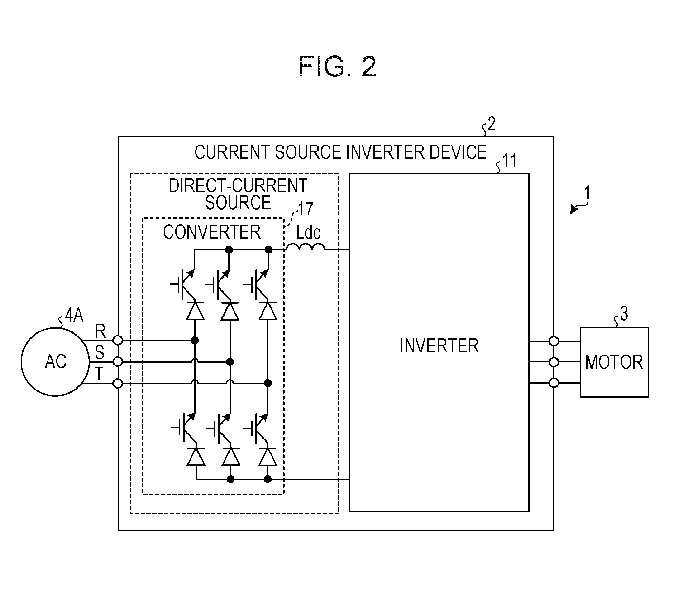

The current source inverter device 2 converts DC power supplied from the DC source 4 into desirable AC power and outputs the AC power to the motor 3. The current source inverter device 2 is not limited to the configuration shown in Fig. 1. For example, as shown in Fig. 2, the current source inverter device 2 may include a converter 17 that converts AC power supplied from a three-phase AC source 4A into DC power and a reactor Ldc as a DC source. Fig. 2 is another configuration diagram of the motor driving system 1.

As shown in Fig. 1, the current source inverter device 2 includes terminals Tp, $T_N$, $T_{U1}$, $T_{U2}$, $T_{V1}$, $T_{V2}$, $T_{W1}$, and $T_{W2}$, an inverter 11, and a controller 20.

The terminals $T_{U1}$, $T_{V1}$, and $T_{W1}$ are connected with a first three-phase winding 5 included in the motor 3. Also, the terminals Tp and $T_N$ are respectively connected with a positive electrode and a negative electrode of the DC source 4. Further, the terminals $T_{U2}$, $T_{V2}$, and $T_{W2}$ are connected with a second three-phase winding 6 included in the motor 3.

The inverter 11 is connected with the DC source 4 through the terminals Tp and $T_N$. Further, the inverter 11 is connected with the motor 3 through the terminals $T_{U1}$, $T_{V1}$, and $T_{W1}$, and the terminals $T_{U2}$, $T_{V2}$, and $T_{W2}$.

The controller 20 is connected with the position sensor 10. The controller 20 controls the inverter 11 and the motor 3. The controller 20 selects one of or both the first three-phase winding 5 and the second three-phase winding 6 based on the rotation speed of the motor 3 for each phase of a U-phase, a V-phase, and a W-phase of the motor 3, and determines the selected three-phase winding as a supply target of AC power. Accordingly, the speed control range for the motor 3 can be expanded without switching the winding state of the motor 3. The details of the inverter 11 and the controller 20 are more specifically described later.

The motor 3 includes the first three-phase winding 5, the second three-phase winding 6, and a rotor 9. For example, the motor 3 is a motor having three-phase double windings formed of double windings in which stator windings are insulated from each other, for example, an induction motor or a permanent-magnet synchronous motor. The number of windings of each of the windings 5a, 5b, and 5c of the first three-phase winding 5, and the number of windings of each of the windings 6a, 6b, and 6c of the second three-phase winding 6 are the same. One end of the winding 5a is connected with the terminal $T_{U1}$, one end of the winding 5b is connected with the terminal $T_{V1}$, and one and of the winding 5c is connected with the terminal $T_{W1}$. Also, one end of the winding 6a is connected with the terminal $T_{U2}$, one end of the winding 6b is connected with the terminal $T_{V2}$, and one end of the winding 6c is connected with the terminal $T_{W2}$. The terminals are included in the current source inverter device 2.

The windings 5a, 5b, and 5c of the first three-phase winding 5 have polarities reverse to the windings 6a, 6b, and 6c of the second three-phase winding 6. To be specific, the two windings corresponding to each phase of the motor 3 are inserted into the same slot of the stator, are electromagnetically densely coupled to each other, and have winding directions with mutually reversed polarities. In Fig. 1, black dots indicate the polarities of the winding directions.

The rotor 9 is arranged to face a stator (the first three-phase winding 5 and the second three-phase winding 6). The other ends of the windings 5a, 5b, and 5c are mutually connected. Also, the other ends of the windings 6a, 6b, and 6c are mutually connected.

In the example in Fig. 1, the first and second three-phase windings 5 and 6 are formed by Y connection; however, may be formed by delta connection. For the convenience of description, the U-phase, V-phase, and W-phase of the motor 3 are shown as a U1-phase, a V1-phase, and a W1-phase for the first three-phase winding 5, and a U2-phase, a V2-phase, and a W2-phase for the second three-phase winding 6.

The position sensor 10 is connected with an output shaft of the motor 3. The position sensor 10 detects a phase $\theta$ of the rotor 9 (hereinafter, referred to as rotor phase $\theta$) of the motor 3, and outputs the detected phase $\theta$ to the controller 20. The position sensor 10 is, for example, an encoder or a resolver.

1.2. Detail of Current Source Inverter Device 2

1.2.1. Inverter

As shown in Fig. 1, the inverter 11 includes a switching element unit 12, and filters 16a and 16b. The switching element unit 12 includes switching element units 13 to 15. The switching element units 13, 14, and 15 respectively correspond to the U-phase, V-phase, and W-phase of the motor 3.

The switching element units 13 to 15 each have three switching elements connected in series. To be specific, the switching element unit 13 includes three switching elements Q1u, Q2u, and Q3u connected in series. The switching element unit 14 includes three switching elements Q1v, Q2v, and Q3v connected in series. The switching element unit 15 includes three switching elements Q1w, Q2w, and Q3w connected in series.

The switching elements Q1u to Q3u, Q1v to Q3v, and Q1w to Q3w (hereinafter, occasionally collectively called switching element Qs) are each, for example, a reverse-direction stop insulated gate bipolar transistor (IGBT). In Fig. 1, the switching element Qs is shown by series connection of a transistor and a diode. Alternately, the switching element Qs may be formed by connecting IGBT and a diode in series, or by connecting a metal-oxide-semiconductor field-effect transistor (MOSFET) and a diode in series. Also, the switching element Qs may be formed by connecting a next-generation semiconductor switching element SiC or GaN and a diode in series.

The switching element units 13 to 15 each have two nodes among the switching elements Qs, and the two nodes are respectively connected with different two windings with the same phase of the motor 3. To be specific, regarding the switching element unit 13, a node N1u between the switching elements Q1u and Q2u is connected with the U1-phase of the motor 3, and a node N2u between the switching elements Q2u and Q3u is connected with the U2-phase of the motor 3.

Further, regarding the switching element unit 14, a node N1v between the switching elements Q1v and Q2v is connected with the V1-phase of the motor 3, and a node N2v between the switching elements Q2v and Q3v is connected with the V2-phase of the motor 3. Also, regarding the switching element unit 15, a node N1w between the switching elements Q1w and Q2w is connected with the W1-phase of the motor 3, and a node N2w between the switching elements Q2w and Q3w is connected with the W2-phase of the motor 3.

The filter 16a has capacitors whose one ends are respectively connected with the U1-phase terminal $T_{U1}$, the V1-phase terminal $T_{V1}$, and the W1-phase terminal $T_{W1}$, and the other ends are commonly connected. Also, the filter 16b has capacitors whose one ends are respectively connected with the U2-phase terminal $T_{U2}$, the V2-phase terminal $T_{V2}$, and the W2-phase terminal $T_{W2}$, and the other ends are commonly connected. The filters 16a and 16b each have a function of removing a high-frequency component of current of each phase output from each of the switching element units 13 to 15.

1.2.2. Controller 20

When the controller 20 controls the motor 3, the controller 20 generates a gate signal in a control mode corresponding to the rotation speed of the motor 3, and outputs the generated gate signal to the inverter 11. That is, the controller 20 converts the DC power supplied from the DC source 4 into the AC power by the inverter 11, then outputs the AC power to the motor 3, and controls the motor 3.

The controller 20 switches a control mode between two control modes in accordance with the rotation speed of the motor 3, and controls the inverter 11. The controller 20 selects a first control mode in a low-speed region in which the rotation speed of the motor 3 is relatively low, and selects a second control mode in a high-speed region in which the rotation speed of the motor 3 is relatively high. If the controller 20 selects the first control mode, the AC power is supplied in series to the first and second three-phase windings 5 and 6. If the controller 20 selects the second control mode, the AC power is supplied to only one of the first and second three-phase windings 5 and 6. The counter voltage generated in the motor 3 becomes lower in the second control mode than the counter voltage in the first control mode as long as the rotation speed of the motor 3 is the same.

With the control, the current source inverter device 2 can operate in a wide range from the low-speed region to the high-speed region. The control modes are successively described. Described below is an example in which the motor 3 is controlled by the controller 20 while a synchronous motor serves as a model, the synchronous motor being controllable by two-axis current having d-axis current (field current or magnetic flux current) and q-axis current (torque current) being orthogonal to each other. However, the controller 20 can control the motor 3 according to other model (control method). For example, even in a case of V/f control configured to be executed based on U-, V-, and W-phase current, or an induction motor in which the motor 3 can relatively easily obtain constant-output characteristics, the controller 20 can control the motor by the control method based on such a model.

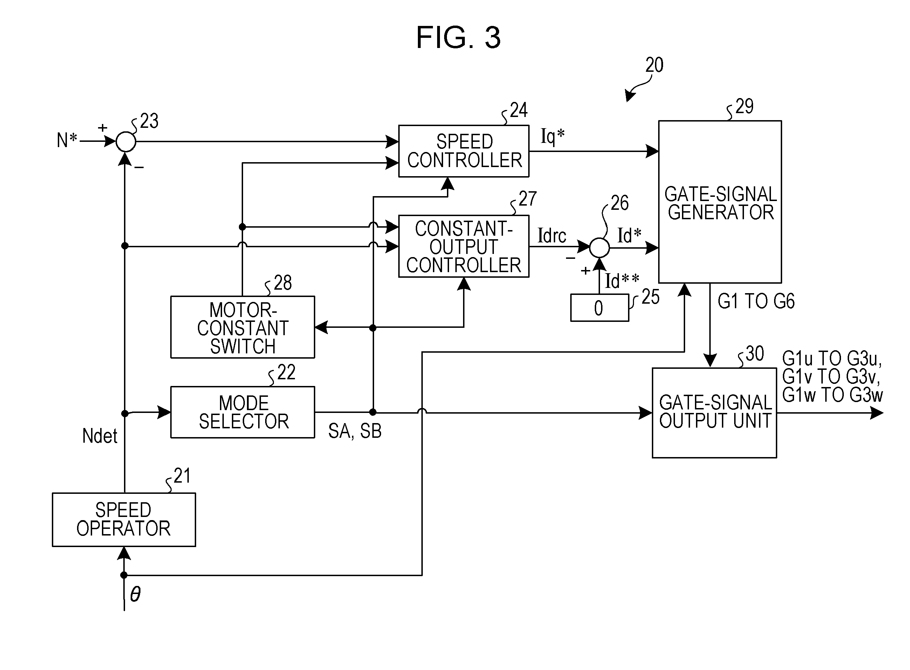

Fig. 3 is an illustration showing a configuration example of the controller 20. As shown in Fig. 3, the controller 20 includes a speed operator 21, a mode selector 22 (example of a selector and a first selection command unit), a subtracter 23, a speed controller 24, a d-axis current command generator 25, a subtracter 26, a constant-output controller 27, a motor-constant switch 28, a gate-signal generator 29, and a gate-signal output unit 30. These units are specifically described below.

1.2.2.1. Speed Operator 21

The speed operator 21 arithmetically operates a rotation speed Ndet of the rotor 9 based on a rotor phase $\theta$ output from the position sensor 10, and outputs the rotation speed Ndet to the mode selector 22, the subtracter 23, and the constant-output controller 27. The speed operator 21 obtains the rotation speed Ndet, for example, by a change amount per unit time of the rotor phase $\theta$.

1.2.2.2. Mode Selector 22

The mode selector 22 selects a control mode from the first control mode and the second control mode based on the rotation speed Ndet. For example, the mode selector 22 selects the first control mode if the rotation speed Ndet is smaller than a set value Ns1, and selects the second control mode if the rotation speed Ndet is the set value Ns1 or greater. The mode selector 22 outputs information of the selected control mode to the speed controller 24, the constant-output controller 27, the motor-constant switch 28, and the gate-signal output unit 30.

Information indicative of the first control mode is, for example, a first mode signal SA with a logical value being "1" and a second mode signal SB with a logical value being "0." Also, information indicative of the second control mode is, for example, a first mode signal SA with a logical value being "0" and a second mode signal SB with a logical value being "1." The first mode signal SA and the second mode signal SB are each merely an example of information of a control mode, and hence the information is not limited to these signals. Hereinafter, the first mode signal SA and the second mode signal SB are collectively called mode signal SX1.

In the example of the mode selector 22 shown in Fig. 3, the control mode is selected based on the rotation speed Ndet. However, the control mode does not have to be selected based on the rotation speed Ndet, as long as the control mode is selected in accordance with speed information of the motor 3. For example, if the current source inverter device 2 executes speed control, the mode selector 22 may select a control mode based on a speed command.

1.2.2.3. Subtracter 23 and Speed Controller 24

The subtracter 23 subtracts the rotation speed Ndet from a speed command N* output from a higher-order device (not shown), and outputs the subtraction result to the speed controller 24.

The speed controller 24 generates a q-axis current command Iq* so that the difference between the speed command N* and the rotation speed Ndet becomes zero, and outputs the q-axis current command Iq* to the gate-signal generator 29. The q-axis current command Iq* is a current command of a q-axis component in a d-q-axis rotation coordinate system synchronized with the rotor phase $\theta$.

Also, the speed controller 24 can control the q-axis current (torque current) so that output effective power Pe is not changed before and after the switching between the first control mode and the second control mode. For example, the speed controller 24 limits the q-axis current command Iq* to a value multiplied by Nbase/Ns1 when the control mode is switched from the first control mode to the second control mode, so that the output effective power Pe is not changed before and after the switching of the control mode.

In contrast, the speed controller 24 multiplies the q-axis current command Iq* by Ns1/Nbase when the control mode is switched from the second control mode to the first control mode, so that the output effective power Pe is not changed before and after the switching of the control mode. The speed controller 24 detects a switching timing between the first control mode and the second control mode by a change in logical value of the mode signal SX1.

1.2.2.4. d-axis Current Command Generator 25 and Subtracter 26

The d-axis current command generator 25 generates a d-axis current command Id**, and outputs the d-axis current command Id** to the subtracter 26. The d-axis current command Id** is, for example, zero if the motor 3 is a synchronous motor, and is, for example, a positive predetermined value if the motor 3 is an induction motor. The subtracter 26 subtracts a d-axis field weakening current command value Idrc output from the constant-output controller 27, from the d-axis current command Id**, and outputs a d-axis current command Id* being the subtraction result to the gate-signal generator 29.

1.2.2.5. Constant-output Controller 27

The constant-output controller 27 generates the field weakening current command value Idrc corresponding to the rotation speed Ndet from the speed operator 21 and the logical value of the mode signal SX1 from the mode selector 22, and outputs the field weakening current command value Idrc to the subtracter 26. Alternatively, the field weakening current command value Idrc may be generated by using a motor constant from the motor-constant switch 28 (described later).

The field weakening current command value Idrc is substantially zero until the rotation speed Ndet of the motor 3 reaches a base rotation speed value Nbase. If the rotation speed Ndet exceeds the base rotation speed value Nbase, the constant-output controller 27 changes the field weakening current command value Idrc in a direction in which the field of the motor 3 is weakened in accordance with an increase in rotation speed Ndet.

Also, if the rotation speed Ndet of the motor 3 becomes the set value Ns1 and the control mode is switched from the first control mode to the second control mode, the constant-output controller 27 sets the field weakening current command value Idrc at substantial zero. If the rotation speed Ndet of the motor 3 exceeds the set value Ns1, the constant-output controller 27 changes the field weakening current command value Idrc in a direction in which the field of the motor 3 is weakened in accordance with an increase in rotation speed Ndet.

A region in which the rotation speed Ndet is lower than the base rotation speed value Nbase is occasionally called constant torque region, and a region in which the rotation speed Ndet is equal to or higher than the base rotation speed value Nbase is occasionally called constant output region. Also, the method of field weakening control is not limited to the method using the field weakening current command value Idrc, and may execute field weakening control by other known technology.

1.2.2.6. Motor-constant Switch 28

The motor-constant switch 28 outputs a motor constant corresponding to the control mode in accordance with the mode signal SX1 from the mode selector 22, to the speed controller 24 and the constant-output controller 27. In this case, a motor constant corresponding to a control mode is selected from a motor constant for the first control mode and a motor constant for the second control mode, in accordance with the mode signal SX. Accordingly, information of the motor constant used for generation of the q-axis current command Iq* in the speed controller 24 and generation of the field weakening current command value Idrc in the constant-output controller 27 can be properly switched. The information of the motor constant corresponds to each control mode, and is, for example, a torque-current conversion coefficient, a stator resistance, a d-axis inductance, a q-axis inductance, or a stator flux linkage. 1.2.2.7. Gate-signal Generator 29

The gate-signal generator 29 generates gate signals G1 to G6 based on the q-axis current command Iq* from the speed controller 24 and the d-axis current command Id* from the subtracter 26, and outputs the gate signals G1 to G6 to the gate-signal output unit 30.

To be specific, the gate-signal generator 29 generates current commands Iu*, Iv*, and Iw* of the U-phase, V-phase, and W-phase, based on the q-axis current command Iq*, the d-axis current command Id*, and the rotor phase θ. For example, the gate-signal generator 29 generates the current commands Iu*, Iv*, and Iw* according to arithmetic operations in Expressions (1) to (5).

$$I1 = \sqrt{Id^{*2} + Iq^{*2}} \qquad \cdots (1)$$

$$\theta i = \tan^{-1}(Iq^* / Id^*) \qquad \cdots (2)$$

$$Iu^* = I1 \times \sin(\theta + \theta i) \qquad \cdots (3)$$

$$Iv^* = I1 \times \sin(\theta + \theta i - 120) \qquad \cdots (4)$$

$$Iw^* = I1 \times \sin(\theta + \theta i - 240) \qquad \cdots (5)$$

The gate-signal generator 29 generates line current commands Iuw*, Ivu*, and Iwv* from the current commands Iu*, Iv*, and Iw*. For example, the gate-signal generator 29 generates the current commands Iuw*, Ivu*, and Iwv* according to arithmetic operations in Expressions (6) to (8).

$$Iuw^* = \frac{1}{3}(Iu^* - Iw^*) \qquad \cdots (6)$$

$$Ivu^* = \frac{1}{3}(Iv^* - Iu^*) \qquad \cdots (7)$$

$$Iwv^* = \frac{1}{3}(Iw^* - Iv^*) \qquad \cdots (8)$$

The gate-signal generator 29 generates the gate signals G1 to G6 based on the line current commands Iuw*, Ivu*, and Iwv*, and outputs the gate signals G1 to G6 to the gate-signal output unit 30. The generation of the gate signals G1 to G6 based on the line current commands Iuw*, Ivu*, and Iwv* is a known technology, and, for example, a technology disclosed in Japanese Unexamined Patent Application Publication No. 2012-196119 is used.

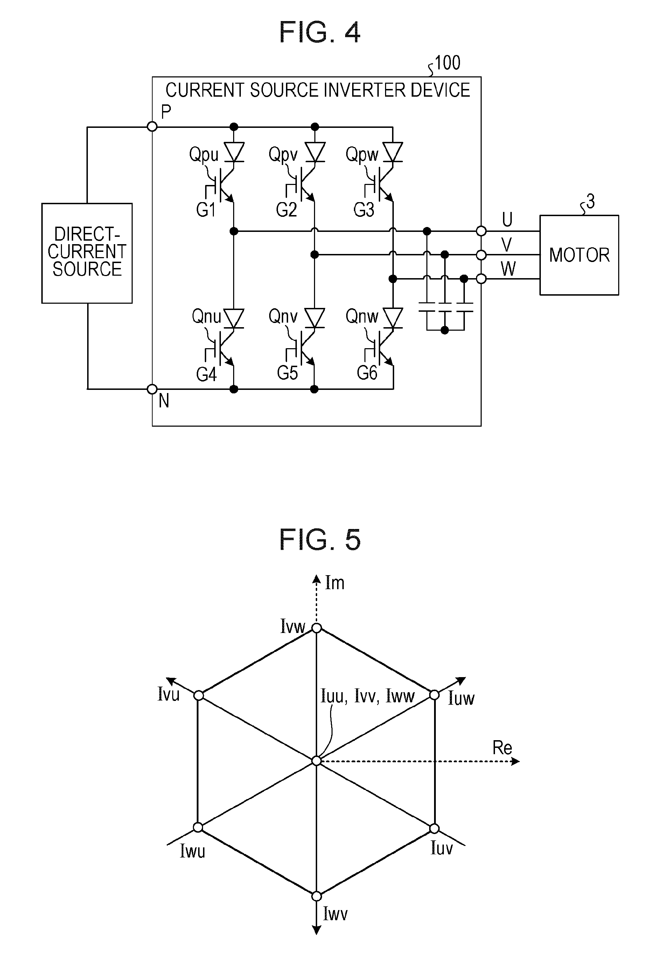

Now, the gate signals G1 to G6 are described. The gate-signal generator 29 generates the gate signals G1 to G6 equivalent to signals for controlling by PWM control and driving three-phase bridges (see Fig. 4) in which two switching elements per phase are connected in series in the inverter 11; and outputs the gate signals G1 to G6 to the gate-signal output unit 30. Fig. 4 is an illustration showing a current source inverter device including an inverter having three-phase bridges.

A current source inverter device 100 shown in Fig. 4 includes three switching elements Qpu, Qpv, and Qpw connected with a positive direct-current (DC) bus P, and three switching elements Qnu, Qnv, and Qnw connected with a negative DC bus N. Hereinafter, the switching elements Qpu, Qpv, and Qpw may be occasionally written as an upper switching element Qp, and the switching elements Qnu, Qnv, and Qnw may be occasionally written as a lower switching element Qn.

Now, the relationship between the gate signals G1 to G6 and current paths of current flowing through the motor 3 is described. The gate signals G1 to G6 are gate signals generated so that one of the upper switching elements Qp and one of the lower switching elements Qn are simultaneously in conduction. The combination of the switching elements Qp and Qn that are turned ON by the gate signals G1 to G6 is successively shifted as follows.

(Qpu, QnV), (Qpu, Qnw), (Qpv, Qnw), (Qpv, Qnu), (Qpw, Qnu), and then (Qpw, Qnv).

To meet the successive shift, the path of current flowing through the motor 3 is shifted as follows.

Iuv, Iuw, Ivw, Ivu, Iwu, and then Iwv.

For example, Iuv indicates current flowing in the order from the positive DC bus P, the U-phase of the motor 3, the V-phase of the motor 3, and the negative DC bus N. Also, for example, Ivu indicates current flowing in the order from the positive DC bus P, the V-phase of the motor 3, the U-phase of the motor 3, and the negative DC bus N.

Also, with combinations of (Qpu, Qnu), (Qpv, Qnv), and (Qpw, Qnw), current paths that establish short circuits between the positive DC bus P and the negative DC bus N are formed. The current paths respectively correspond to current Iuu, Ivv, and Iww, and do not allow current to flow to the motor 3.

Next, the relationship between the above-described nine types of current paths and current vectors according to a space vector method is described. Fig. 5 is an illustration in the form of space vectors showing the current Iuv, Iuw, Ivw, Ivu, Iwu, Iwv, Iuu, Ivv, and Iww of the above-described nine types of current paths when the current is expressed as the current vectors.

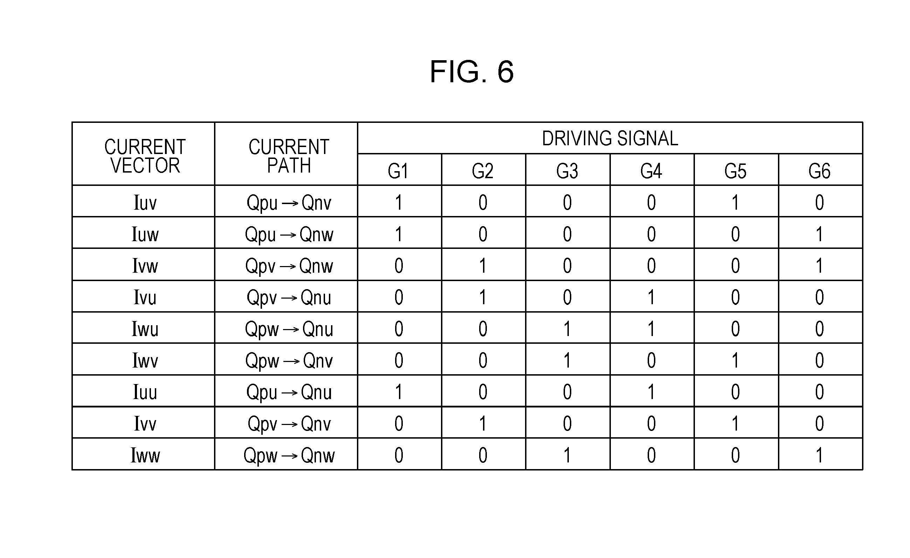

Also, Fig. 6 is a relationship diagram between logical values of the gate signals G1 to G6 and the current vectors Iuv, Iuw, Ivw, Ivu, Iwu, Iwv, Iuu, Ivv, and Iww. The switching elements Qpu, Qpv, Qpw, Qnu, Qnv, and Qnw are turned ON if the logical values of the gate signals G1 to G6 are "1." The switching elements Qpu, Qpv, Qpw, Qnu, Qnv, and Qnw are turned OFF if the logical values of the gate signals G1 to G6 are "0." The gate signals G1 to G6 are low level signals if the logical values are "0" and are high level signals if the logical values are "1."

The gate-signal generator 29 generates the gate signals G1 to G6 that successively shift the current vectors in the order of Iuv, Iuw, Ivw, Ivu, Iwu, and Iwv, based on the line current commands Iuw*, Ivu*, and Iwv* expressed in Expressions (6) to (8) provided above. The gate signals G1 to G6 are signals composed by the space vector method by using neighboring three types of vectors. The neighboring three types of vectors have combinations of, for example, (Iuw, Ivw, Iww), (Iwv, Iuv, Ivv), etc. The space vector method is known, and hence the detailed description is omitted.

1.2.2.8. Gate-signal Output Unit 30

The gate-signal output unit 30 generates gate signals Glu, G2u, G3u, G1v, G2v, G3v, G1w, G2w, and G3w (hereinafter, occasionally collectively called gate signal Gs) for driving the switching element Qs of the inverter 11 based on the gate signals G1 to G6. The gate signals G1u to G3u, G1v to G3v, and G1w to G3w respectively drive the switching elements Q1u to Q3u, Q1v to Q3v, and Q1w to Q3w.

According to the gate signal Gs output from the gate-signal output unit 30, one of the first and second three-phase windings 5 and 6 serves as a supply target of AC power in the first control mode, and both the first and second three-phase windings 5 and 6 serve as a supply target of AC power in the second control mode. Hereinafter, an example of a specific configuration of the gate-signal output unit 30 and control of the inverter 11 according to the gate signal Gs are successively described.

Specific Configuration of Gate-signal Output Unit 30

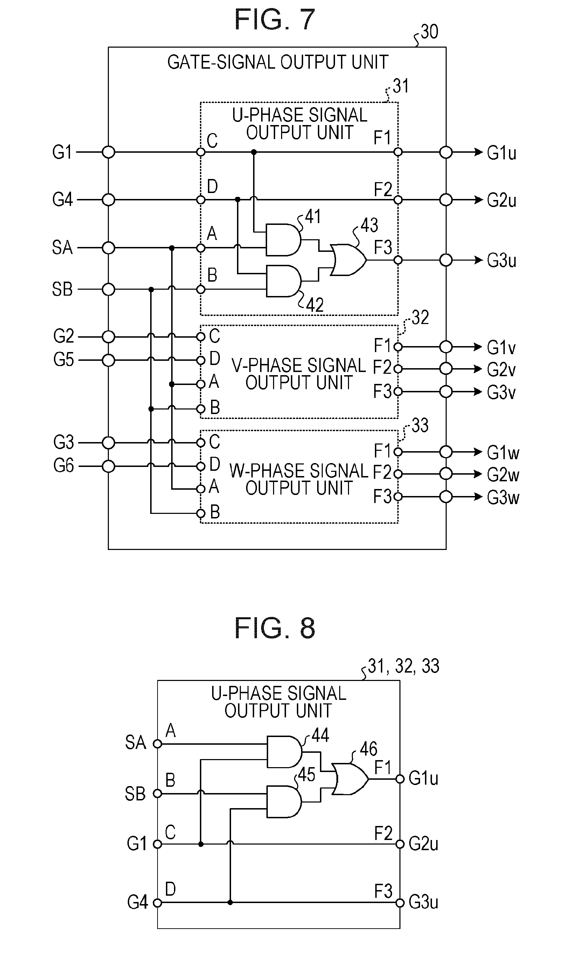

Fig. 7 is an illustration showing a specific configuration example of the gate-signal output unit 30. As shown in Fig. 7, the gate-signal output unit 30 includes a U-phase signal output unit 31, a V-phase signal output unit 32, and a W-phase signal output unit 33.

8

The U-phase signal output unit 31 generates the gate signals Glu, G2u, and G3u for controlling the U-phase switching elements Q1u, Q2u, and Q3u. The V-phase signal output unit 32 generates the gate signals G1v, G2v, and G3v for controlling the V-phase switching elements Q1v, Q2v, and Q3v. The W-phase signal output unit 33 generates the gate signals G1w, G2w, and G3w for controlling the W-phase switching elements Q1w, Q2w, and Q3w.

The U-phase signal output unit 31 includes logical AND operators (AND circuits) 41 and 42, and a logical OR operator (OR circuit) 43. The logical AND operator 41 outputs a logical AND of the gate signal G1 and the first mode signal SA. The logical AND operator 42 outputs a logical AND of the gate signal G4 and the second mode signal SB. The logical OR operator 43 outputs a logical OR of the output of the logical AND operator 41 and the output of the logical AND operator 42.

Since the first mode signal SA has the logical value of "1" and the second mode signal SB has the logical value of "0" in the first control mode, the U-phase signal output unit 31 outputs signals equivalent to the gate signal G1 as the gate signals G1u and G3u, and outputs a signal equivalent to the gate signal G4 as the gate signal G2u.

Also, since the first mode signal SA has the logical value of "0" and the second mode signal SB has the logical value of "1" in the second control mode, the U-phase signal output unit 31 outputs a signal equivalent to the gate signal G1 as the gate signal G1u, and outputs signals equivalent to the gate signal G4 as the gate signals G2u and

G3u.

The V-phase signal output unit 32 has a configuration similar to the U-phase signal output unit 31. The V-phase signal output unit 32 outputs signals equivalent to the gate signal G2 as the gate signals G1v and G3v, and outputs a signal equivalent to the gate signal G5 as the gate signal G2v in the first control mode. Also, the V-phase signal output unit 32 outputs a signal equivalent to the gate signal G2 as the gate signal G1v, and outputs signals equivalent to the gate signal G5 as the gate signals G2v and G3v in the second control mode.

The W-phase signal output unit 33 has a configuration similar to the U-phase signal output unit 31. The W-phase signal output unit 33 outputs signals equivalent to the gate signal G3 as the gate signals G1w and G3w, and outputs a signal equivalent to the gate signal G6 as the gate signal G2w in the first control mode. Also, the W-phase signal output unit 33 outputs a signal equivalent to the gate signal G3 as the gate signal G1w, and outputs signals equivalent to the gate signal G6 as the gate signals G2w and G3w in the second control mode.

In the above-described embodiment, in the second control mode, current is supplied to the first three-phase winding 5; however, current may be supplied to the second three-phase winding 6 instead of the first three-phase winding 5. In this case, the U-phase signal output unit 31, the V-phase signal output unit 32, and the W-phase signal output unit 33 are configured, for example, as shown in Fig. 8.

Fig. 8 is an illustration showing another specific configuration example of a U-phase signal output unit 31. A V-phase signal output unit 32 and a W-phase signal output unit 33 also have configurations similar to the U-phase signal output unit 31 shown in Fig. 8. As shown in Fig. 8, the U-phase signal output unit 31 includes logical AND operators 44 and 45, and a logical OR operator 46. The logical AND operator 44 outputs a logical AND of the gate signal G1 and the first mode signal SA. The logical AND operator 45 outputs a logical AND of the gate signal G4 and the second mode signal SB. The logical OR operator 46 outputs a logical OR of the output of the logical AND operator 44 and the output of the logical AND operator 45.

In the first control mode, for example, the U-phase signal output unit 31 shown in Fig. 8 outputs signals equivalent to the gate signal G1 as the gate signals G1u and G2u, and outputs a signal equivalent to the gate signal G4 as the gate signal G3u. Also, in the second control mode, for example, the U-phase signal output unit 31 shown in Fig. 8 outputs a signal equivalent to the gate signal G1 as the gate signal G2u, and outputs signals equivalent to the gate signal G4 as the gate signals G1u and G3u. In Figs. 7 and 8, reference signs A to D, and F1 to F3 are added to terminals of each of the U-phase signal output unit 31, the V-phase signal output unit 32, and the W-phase signal output unit 33 to indicate that the V-phase signal output unit 32 and the W-phase signal output unit 33 each have the relationship of functions and terminals equivalent to that of the U-phase signal output unit 31. The configuration of the gate-signal output unit 30 is not limited to the configurations shown in Figs. 7 and 8.

Control of Inverter 11 According to Gate Signal Gs

When the first control mode is selected by the mode selector 22, the gate-signal output unit 30 generates the gate signal Gs for supplying AC power in series from the inverter 11 to each of the first and second three-phase windings 5 and 6, and outputs the gate signal Gs to the inverter 11.

In the first control mode, the pairs of the upper and lower switching elements Qp and Qn, specifically, (Q1u, Q3u), (Q1v and Q3v), and (Q1w, Q3w) are respectively driven by the gate signals G1, G2, and G3, and the middle switching elements Q2u, Q2v, and Q2w are respectively driven by the gate signals G4, G5, and G6.

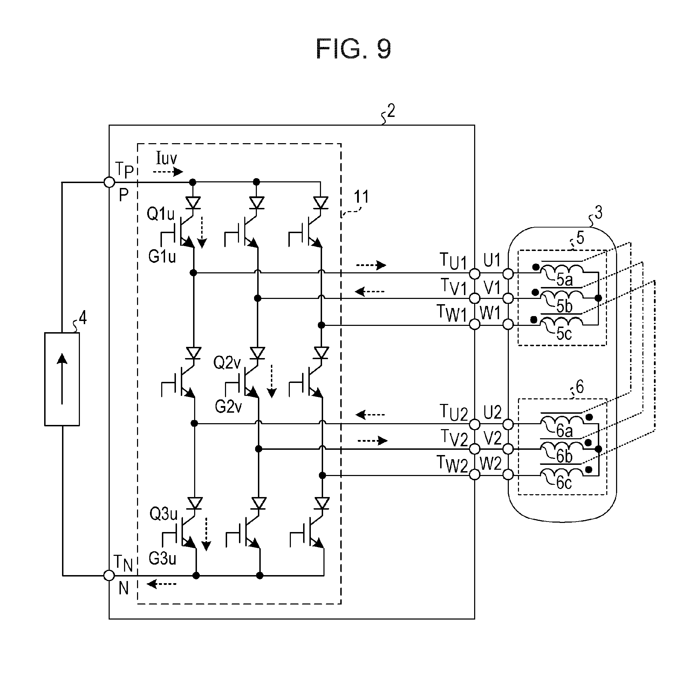

Fig. 9 is an illustration showing the flow of the current Iuv flowing from the U-phase to the V-phase. As shown in Fig. 9, the current flows from the positive DC bus P, passes through the switching element Q1u and the U1 terminal $T_{U1}$, and thus flows from the current source inverter device 2 to the first three-phase winding 5. The current Iuv passes through the U1-phase winding 5a and the V1-phase winding 5b in the first three-phase winding 5, and flows to the V1 terminal $T_{V1}$ of the current source inverter device 2.

The current Iuv passes through the V1 terminal $T_{V1}$, the switching element Q2v and the V2 terminal $T_{V2}$, and thus flows from the current source inverter device 2 to the second three-phase winding 6. The current Iuv passes through the V2-phase winding 6b and the U2-phase winding 6a in the second three-phase winding 6, and flows to the U2 terminal $T_{U2}$ of the current source inverter device 2. The current Iuv passes through the U2 terminal $T_{U2}$ and the switching element Q3u, and flows to the negative DC bus N.

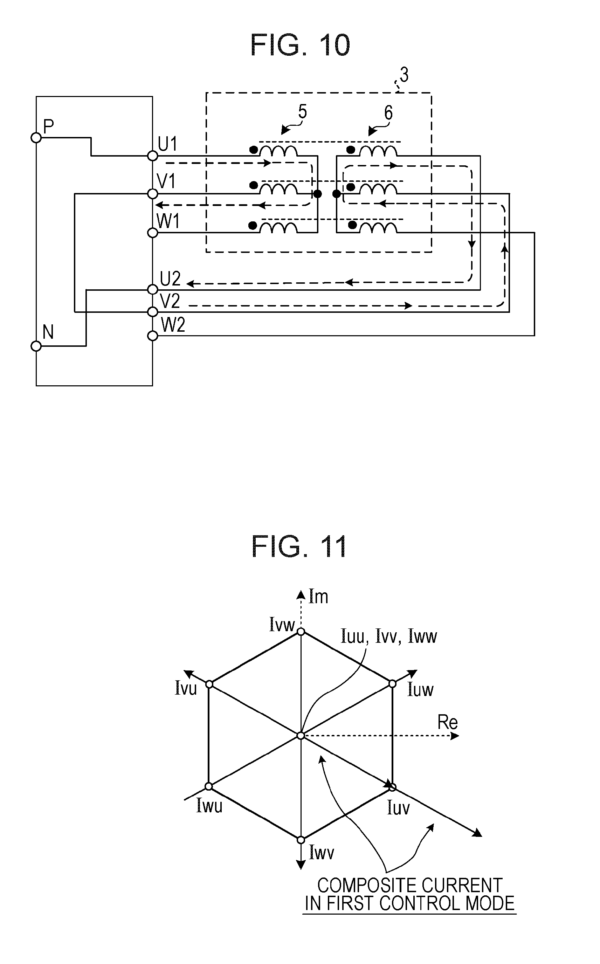

Fig. 10 is an illustration showing a path of the current Iuv in the motor 3. As shown in Fig. 10, the current flows from the U1-phase to the V1-phase in the first three-phase winding 5, whereas the current flows from the V2-phase to the U2-phase in the second three-phase winding 6. The first three-phase winding 5 and the second three-phase winding 6 are arranged so that the polarities of the windings are reverse to each other. Hence, the current flowing through these three-phase windings 5 and 6 generate a magnet motive force composed with the same polarity. Accordingly, as shown in Fig. 11, the current source inverter device 2 can output a composite current vector having the maximum value that is twice the current vector (see Fig. 5) in the current source inverter device 100 (see Fig. 4). Fig. 11 is an illustration showing space vectors of the current source inverter device 2.

As described above, in the first control mode, AC power is supplied in series from the inverter 11 to the first and second three-phase windings 5 and 6. Hence, the current source inverter device 2 can generate a relatively high counter voltage, and can provide a relatively high torque in the low-speed region, as compared with the current source inverter device 100.

In the first control mode, if the state is shifted from the current vector Iuv to the current vector Iuu, the gate-signal output unit 30 sets the logical value of the gate signal G2v at "0" and the logical value of the gate signal G2u at "1." Accordingly, the switching element Q2v is turned OFF and the switching element Q3u is turned ON, and current is not supplied from the current source inverter device 2 to the motor 3.

In contrast, if the mode selector 22 selects the second control mode, the gate-signal output unit 30 generates the gate signal G2 so that AC power is supplied to only one three-phase winding of the first and second three-phase windings 5 and 6, and outputs the gate signal Gs to the inverter 11.

In the second control mode, the upper switching elements Q1u, Q1v, and Q1w are respectively driven by the gate signals G1, G2, and G3, and the pairs of the middle and lower switching elements Qp and Qn, specifically, (Q2u, Q3u), (Q2v and Q3v), and (Q2w, Q3w) are respectively driven by the gate signals G4, G5, and G6.

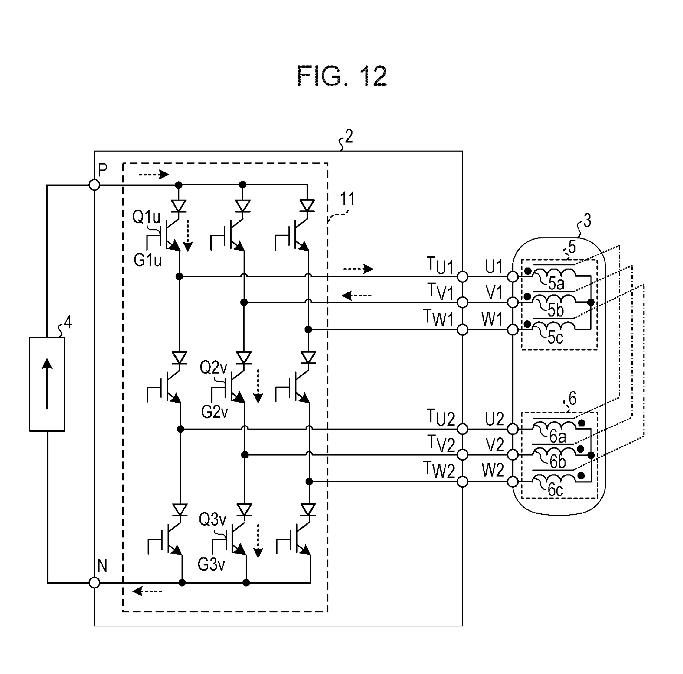

Fig. 12 is an illustration showing the flow of the current Iuv being in conduction from the U-phase to the V-phase. As shown in Fig. 12, the current flows from the positive DC bus P, passes through the switching element Q1u and the U1 terminal $T_{U1}$, and thus flows from the current source inverter device 2 to the first three-phase winding 5. The current Iuv passes through the U1-phase winding 5a and the V1-phase winding 5b in the first three-phase winding 5, and flows to the V1 terminal $T_{V1}$ of the current source inverter device 2. The current Iuv passes through the V1 terminal $T_{V1}$ and the switching elements Q2v and Q3v, and flows to the negative DC bus N.

As described above, in the second control mode, AC power is supplied from the inverter 11 only to the first three-phase winding 5. Hence, the counter power of the motor 3 is halved as compared with the counter power in the first control mode. Accordingly, in the second control mode, the speed range can be expanded as compared with the first control mode.

In this way, in the current source inverter device 2, the control mode is switched in accordance with the rotation speed Ndet of the motor 3. Accordingly, the speed control range can be expanded for the motor 3.

As described above, in the current source inverter device 2 according to the first embodiment, the inverter 11 is configured such that 2+1 switching elements Qs are connected in series for each of the U-phase, V-phase, and W-phase of the motor 3, and two nodes among the switching elements Qs are respectively connected with different two windings with the same phase among the windings of the motor 3. The controller 20 includes the mode selector 22 that selects one or both of two windings per phase based on the rotation speed of the motor 3, as a supply target of AC power. Accordingly, in the current source inverter device 2, an induced voltage generated in the motor 3 can be reduced, and the speed control range can be expanded similarly to the winding switch method of the related art.

2. Second Embodiment

Next, a current source inverter device according to a second embodiment is described. The current source inverter device according to the second embodiment differs from the current source inverter device 2 according to the first embodiment in that a switching mode for the first control mode and the second control mode is provided. In the following description, points different from the motor driving system 1 according to the first embodiment are mainly described, and components having similar functions to those of the first embodiment are given with the same reference signs and redundant description is omitted.

2.1. Motor Driving System

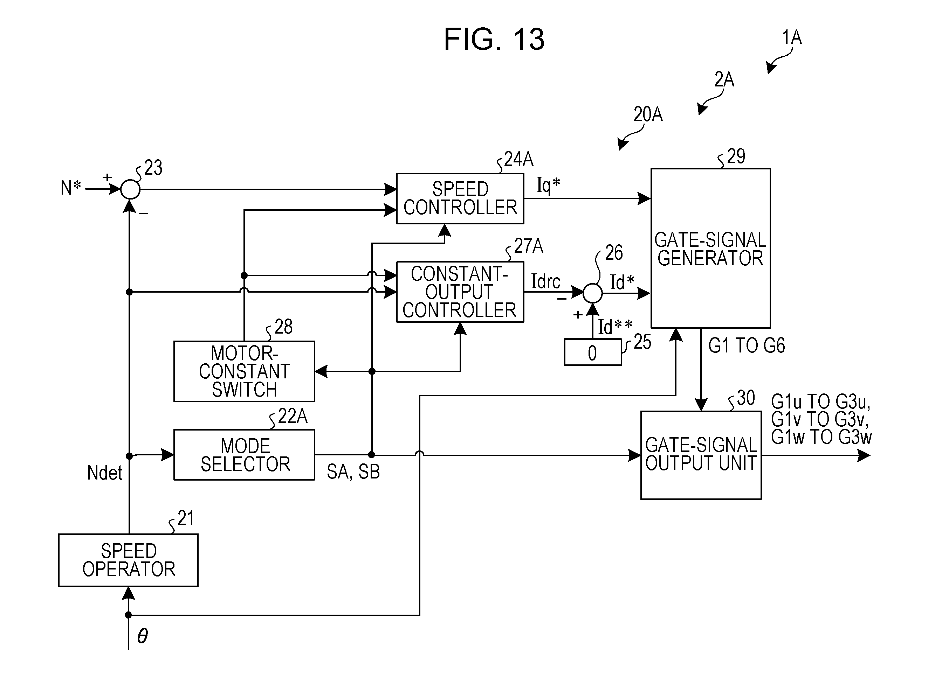

Fig. 13 is a configuration diagram of a controller of a motor driving system according to a second embodiment. A current source inverter device 2A according to the second embodiment executes switching control for repetitively switching the number of windings that supply AC power every phase of the motor 3 with a time ratio corresponding to the rotation speed of the motor 3. Accordingly, the speed control region can be expanded, and additionally a high efficiency region can be expanded. A motor driving system 1A according to the second embodiment is similar to the motor driving system 1 except for the configuration of the controller 20A of the current source inverter device 2A. In the following description, the controller 20A is described in detail.

2.2. Controller 20A of Current Source Inverter Device 2A

As shown in Fig. 13, the controller 20A of the current source inverter device 2A according to the second embodiment includes a speed operator 21, a mode selector 22A (example of selector, and first and second selection command units), a subtracter 23, a speed controller 24A, a d-axis current command generator 25, a subtracter 26, a constant-output controller 27A, a motor-constant switch 28, a gate-signal generator 29, and a gate-signal output unit 30. Hereinafter, the mode selector 22A, the speed controller 24A, and the constant-output controller 27A are specifically described.

2.2.1. Mode Selector 22A

The mode selector 22A generates a first mode signal SA and a second mode signal SB with ON ratios corresponding to a rotation speed Ndet output from the speed operator 21, and outputs the first mode signal SA and the second mode signal SB, to the gate-signal output unit 30. The mode selector 22A, as a first selection command unit, selects a first control mode if Ndet < Nbase, and selects a second control mode if Ns1 < Ndet. The ON ratio is a ratio with which the logical value becomes "1" for a predetermined unit time (for example, carrier period Tc, described later).
Also, the mode selector 22A, as a second selection command unit, may alternately switch the control mode between the first control mode and the second control mode with the time ratio corresponding to the rotation speed Ndet if Nbase ≤ Ndet < Ns1. In the mode selector 22A, the first selection command unit and the second selection command unit have the same configuration; however, the first selection command unit and the second selection command unit may have different configurations or partly common configurations. The time ratio is a temporal ratio with which the first control mode and the second control mode are selected in a predetermined unit time (for example, carrier period Tc, described later).

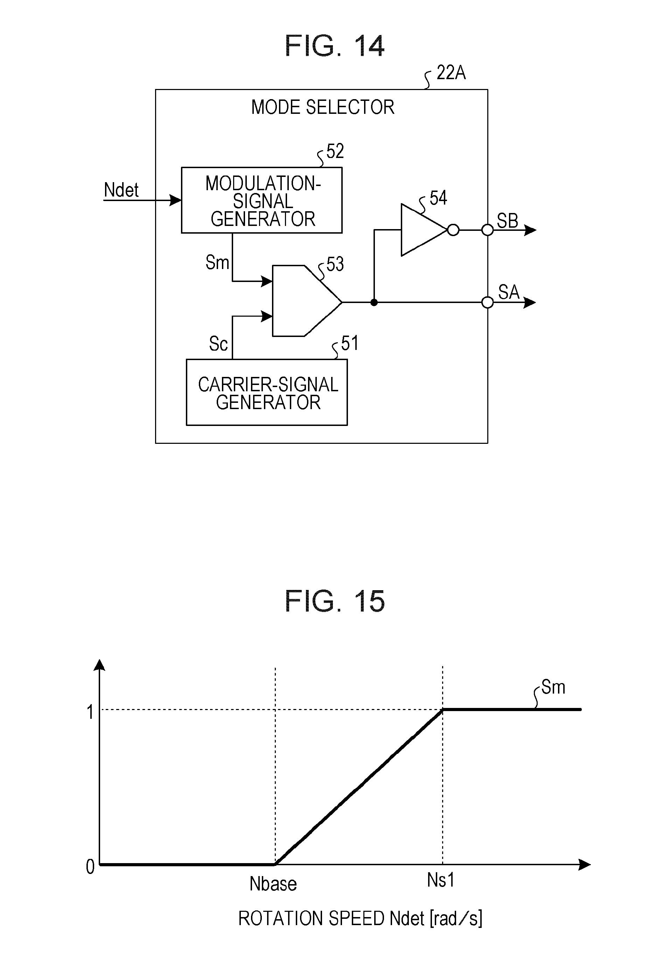

Fig. 14 is a configuration diagram of the mode selector 22A. As shown in Fig. 14, the mode selector 22A includes a carrier-signal generator 51, a modulation-signal generator 52, a comparator 53, and a logical NOT operator (NOT circuit) 54.
The carrier-signal generator 51 generates a carrier signal Sc with a predetermined period and outputs the carrier signal Sc. The carrier signal Sc is, for example, a triangular waveform signal or a saw waveform signal. The period of the carrier signal Sc is desirably a value p (p being a natural number) times a generation period of the gate signals G1 to G6 output from the gate-signal generator 29 with regard to the turn ON and OFF periods of the switching element Qs, and is desirably synchronized with the gate signals G1 to G6.
The modulation-signal generator 52 generates a modulation signal Sm having a magnitude corresponding to the rotation speed Ndet output from the speed operator 21. Fig. 15 is a relationship diagram of the rotation speed Ndet and the magnitude of the modulation signal Sm. As shown in Fig. 15, the magnitude of the modulation signal Sm is "0" if Ndet < Nbase, and the magnitude of the modulation signal Sm is "1" if Ns1 < Ndet. In contrast, the magnitude of the modulation signal Sm is (Ndet - Nbase)/(Ns1 - Nbase) between "0" and "1" if Nbase ≤ Ndet < Ns1.
The comparator 53 compares the carrier signal Sc with the modulation signal Sm, and generates the second mode signal SB. To be specific, the comparator 53 outputs the first mode signal SA having the logical value being "1" if the modulation signal Sm is smaller than the carrier signal Sc, and the comparator 53 outputs the second mode signal SB having the logical value being "0" if the modulation signal Sm is equal to or greater than the carrier signal Sc. The logical NOT operator 54 receives an input of the first mode signal SA, and outputs the second mode signal SB, in which the logical value of the first mode signal SA is inverted.

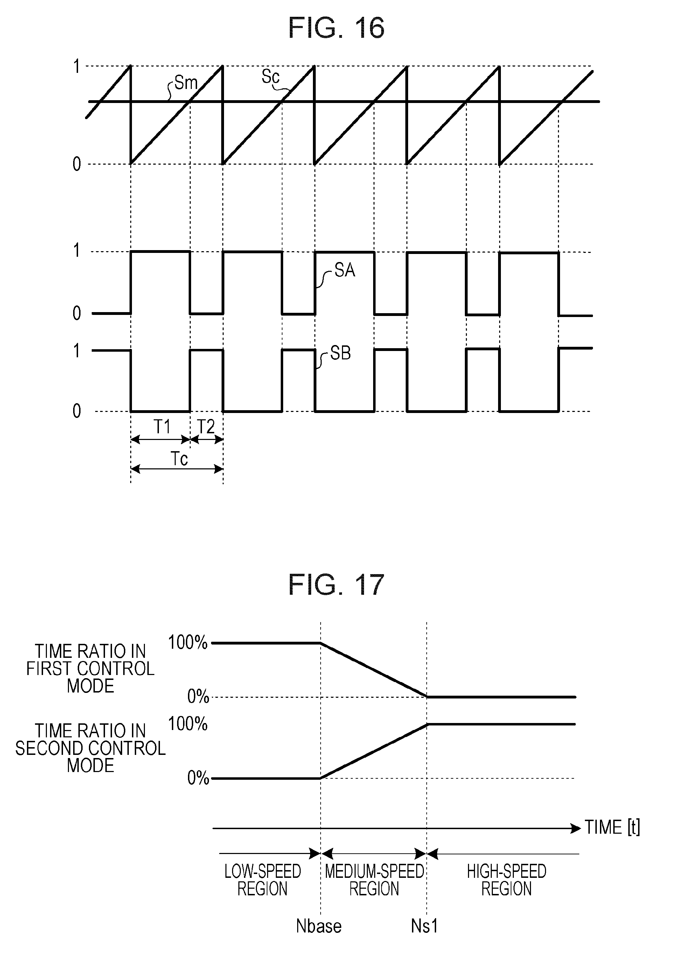

Fig. 16 is an illustration showing an example of waveforms of the carrier signal Sc, modulation signal Sm, first mode signal SA, and second mode signal SB if Nbase ≤ Ndet < Ns1. As shown in Fig. 16, the logical value of the first mode signal SA becomes "1" for a first period T1 and becomes "0" for a second period T2 every carrier period Tc. Also, the logical value of the second mode signal SB becomes "0" for the first period T1 and becomes "1" for the second period T2 every carrier period Tc.
Hence, if Nbase ≤ Ndet < Ns1, the time ratio with which the logical value of the first mode signal SA becomes "1" is expressed by T1/Tc, and the time ratio with which the logical value of the second mode signal SB becomes "1" is expressed by T2/Tc. Accordingly, the current source inverter device 2A executes the switching mode in which the first control mode and the second control mode are alternately turned ON and OFF if Nbase $\leq$ Ndet < Ns1.

In contrast, the magnitude of the modulation signal Sm is "0" if Ndet < Nbase, and the magnitude of the modulation signal Sm is "1" if Ns1 $\leq$ Ndet. Hence, the current source inverter device 2A operates in the first control mode if Ndet < Nbase, and operates in the second control mode if Ns1 $\leq$ Ndet.

Fig. 17 is a relationship diagram of the time ratio of the first control mode and the time ratio of the second control mode when the motor 3 is accelerated. As shown in Fig. 17, when the motor 3 is accelerated or decelerated, the time ratio of the first control mode and the time ratio of the second control mode are continuously changed between 0% and 100%.

2.2.2. Speed Controller 24A

The speed controller 24A (Fig. 13) can limit, for example, the q-axis current command Iq* to a value multiplied by (Nbase + Ns1)/(2Ns1) within the range of Nbase $\leq$ Ndet < Ns1. Also, if the rotation speed Ndet reaches the set value Ns1, the speed controller 24A can limit the q-axis current command Iq* to a value multiplied by Nbase/Ns1, similarly to the first embodiment.

2.2.3. Constant-output Controller 27A

The constant-output controller 27A (Fig. 13) sets, for example, the field weakening current command value Idrc to be a half of the d-axis current command that is immediately before the rotation speed Ndet increases and reaches the set value Ns1 in the first embodiment, within the range of the Nbase $\leq$ Ndet < Ns1. If the rotation speed Ndet reaches the set value Ns1, the constant-output controller 27A deactivates the field weakening control, and sets the field weakening current command value Idrc at substantially zero similarly to the first embodiment.

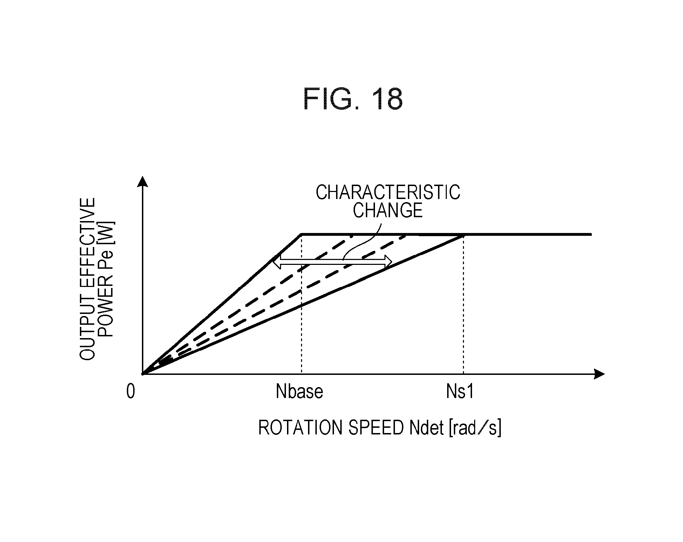

With such control, in the current source inverter device 2A, the motor 3 can be operated equivalently to a case that a motor, the characteristic of which is changed as shown in Fig. 18, is hypothetically operated. Fig. 18 is a relationship diagram of the rotation speed Ndet and the output effective power Pe.

As described above, since the current source inverter device 2A executes the switching control in which the number of windings for supplying AC power is switched every phase of the motor 3, the speed control range can be expanded and the high efficiency region can be expanded.

3. Third Embodiment

Next, a current source inverter device according to a third embodiment is described. The current source inverter devices 2 and 2A of the first and second embodiments each operate in the first and second control modes; however, the current source inverter device according to the third embodiment operates in a third control mode in addition to the first and second control modes. In the following description, points different from the motor driving system 1 according to the first embodiment are mainly described, and components having similar functions to those of the first embodiment are given with the same reference signs and redundant description is omitted.

3.1. Motor Driving System

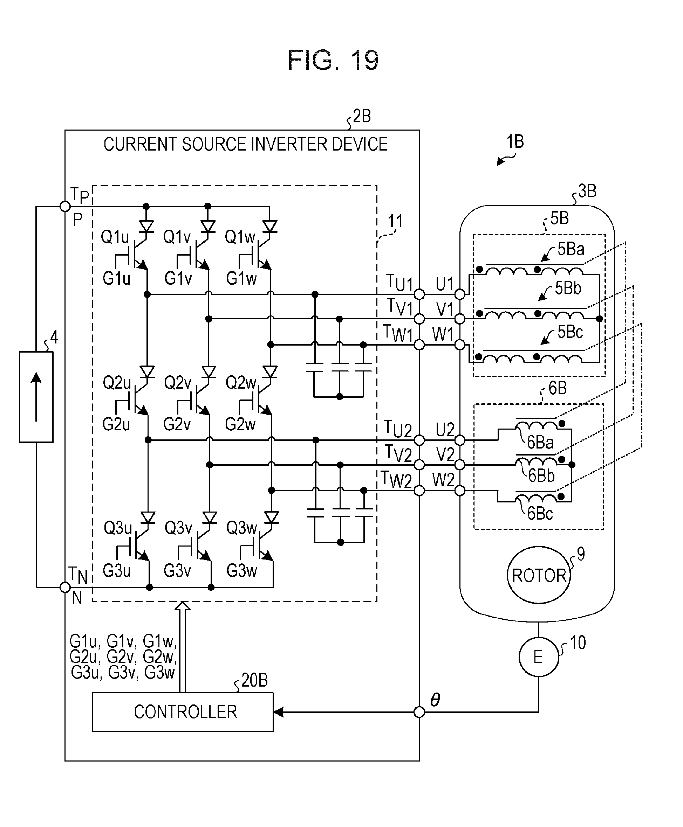

Fig. 19 is a configuration diagram of a motor driving system 1B according to the third embodiment. As shown in Fig. 19, the motor driving system 1B according to the third embodiment includes a current source inverter device 2B, a motor 3B, and a DC source 4.

The current source inverter device 2B includes an inverter 11 and a controller 20B. The inverter 11 has a configuration similar to the inverter 11 according to the first embodiment. In contrast, the controller 20B differs from the controller 20 in that the controller 20B executes the third control mode in addition to the first and second control modes.

Also, the motor 3B differs from the motor 3 in that the number of windings of a first three-phase winding 5B is twice the number of windings of a second three-phase winding 6B. That is, windings 5Ba to 5Bc each have a number of windings that is twice the number of windings of each of windings 6Ba to 6Bc.

3.2. Controller 20B

The controller 20B supplies power to the first and second three-phase windings 5B and 6B in the first control mode. The controller 20B supplies power to the first three-phase winding 5B in the second control mode. The controller 20B supplies power to the second three-phase winding 6B in the third control mode.

Accordingly, when current of the same value is applied to the motor 3B, the induced voltage in the second control mode becomes 2/3 as compared with the first control mode, and the induced voltage in the third control mode becomes 1/3 as compared with the first control mode. Hence, with the current source inverter device 2B, the speed control range can be further expanded as compared with the current source inverter device 2.

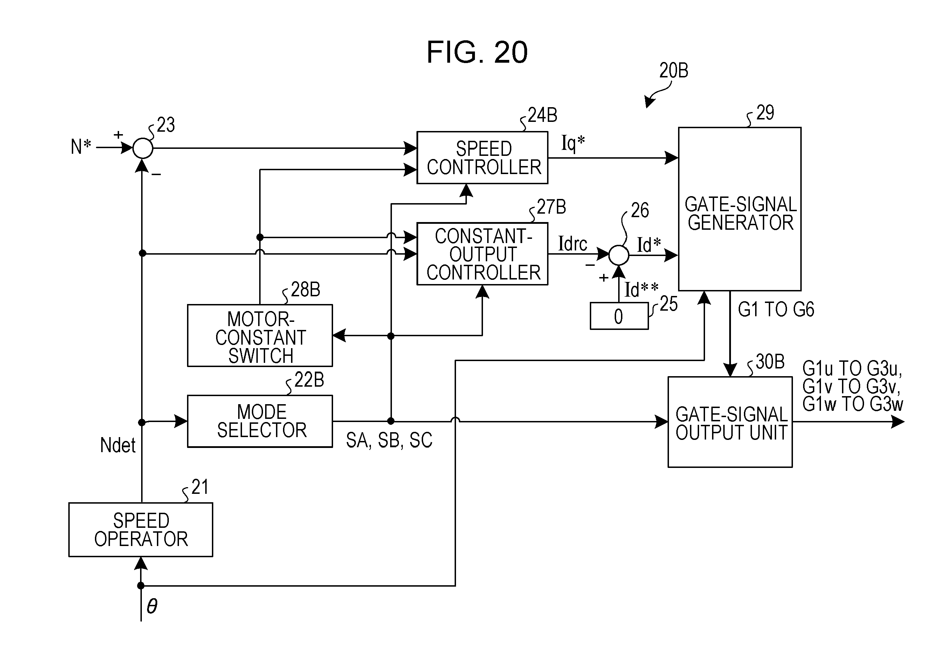

Fig. 20 is an illustration showing a configuration example of the controller 20B. As shown in Fig. 20, the controller 20B includes a speed operator 21, a mode selector 22B (example of selector and first selection command unit), a subtracter 23, a speed controller 24B, a d-axis current command generator 25, a subtracter 26, a constant-output controller 27B, a motor-constant switch 28B, a gate-signal generator 29, and a gate-signal output unit 30B. Hereinafter, the mode selector 22B, the speed controller 24B, the constant-output controller 27B, the motor-constant switch 28B, and the gate-signal output unit 30B are specifically described.

### 3.2.1. Mode Selector 22B

The mode selector 22B selects one control mode from the first to third control modes based on a rotation speed Ndet and set values Ns1 and Ns2. To be specific, the mode selector 22B selects the first control mode if Ndet < Ns1, selects the second control mode if Ns1 ≤ Ndet < Ns2, and selects the third control mode if Ins2 ≤ Ndet. The mode selector 22B outputs information of the selected control mode to the speed controller 24B, the constant-output controller 27B, the motor-constant switch 28B, and the gate-signal output unit 30B.

Information indicative of the first control mode is, for example, a first mode signal SA with a logical value being "1," and second and third mode signals SB and SC with logical values being "0." Also, information indicative of the second control mode is, for example, the first and third mode signal SA and SC with logical values being "0" and the second mode signal SB with a logical value being "1." Also, information indicative of the third control mode is, for example, the third mode signal SC with a logical value being "1" and the first and second mode signals SA and SB with logical values being "0."

The first to third mode signals SA, SB, and SC are each merely an example of information of a control mode, and hence the information is not limited to these signals. Hereinafter, the first to third mode signals SA, SB, and SC are collectively written as mode signal SX2.

### 3.2.2. Speed Controller 24B

The speed controller 24B generates a q-axis current command Iq* so that the difference between a speed command N* and a rotation speed Ndet becomes zero, and outputs the q-axis current command Iq* to the gate-signal generator 29. The speed controller 24B holds the q-axis current command Iq* constant similarly to the speed controller 24 if field weakening control is being executed by the constant-output controller 27B. Also, the speed controller 24B can control q-axis current (torque current) so that output effective power Pe is not changed before and after the switching of the control mode similarly to the speed controller 24.

### 3.2.3. Constant-output Controller 27B

The constant-output controller 27B generates a field weakening current command value Idrc corresponding to the rotation speed Ndet from the speed operator 21 and the logical value of the mode signal SX2 from the mode selector 22B, and outputs the field weakening current command value Idrc to the subtracter 26. For example, the constant-output controller 27B sets the field weakening current command value Idrc at substantially zero at the switching from the first control mode to the second control mode and at the switching from the second control mode to the third control mode. The constant-output controller 27B changes the field weakening current command value Idrc in a direction in which the field of the motor 3B is weakened in accordance with an increase in rotation speed Ndet.

### 3.2.4. Motor-constant Switch 28B

The motor-constant switch 28B selects a motor constant of a control mode corresponding to the mode signal SX2 among motor constants for the first to third control modes, in accordance with the mode signal SX2 from the mode selector 22B, and outputs the motor constant to the speed controller 24B and the constant-output controller 27B. Accordingly, information of the motor constant used for generation of the q-axis current command Iq* in the speed controller 24B and generation of the field weakening current command value Idrc in the constant-output controller 27B can be properly switched.

### 3.2.5. Gate-signal Output Unit 30B

The gate-signal output unit 30B generates a gate signal Gs from the gate signals G1 to G6, in accordance with the mode signal SX2 from the mode selector 22B. With this gate signal Gs, the first and second three-phase windings 5B and 6B become supply targets of AC power in the first control mode, the first three-phase winding 5B becomes a supply target of AC power in the second control mode, and the second three-phase winding 6B becomes a supply target of AC power in the third control mode.

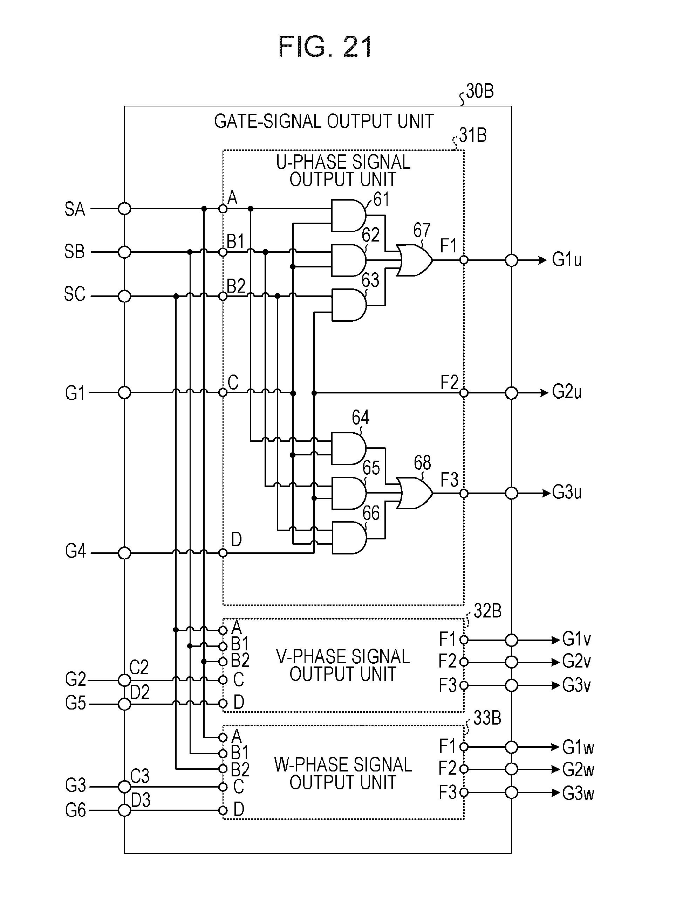

Fig. 21 is an illustration showing a specific configuration example of the gate-signal output unit 30B. As shown in Fig. 21, the gate-signal output unit 30B includes a U-phase signal output unit 31B, a V-phase signal output unit 32B, and a W-phase signal output unit 33B. The U-phase signal output unit 31B generates gate signals Glu, G2u, and G3u, the V-phase signal output unit 32B generates gate signals G1v, G2v, and G3v, and the W-phase signal output unit 33B generates gate signals G1w, G2w, and G3w.

The U-phase signal output unit 31B includes logical AND operators 61 to 66, and logical OR circuits 67 and 68. The logical AND operators 61 and 64 each output a logical AND of the gate signal G1 and the first mode signal SA. The logical AND operator 62 outputs a logical AND of the gate signal G1 and the second mode signal SB. The logical AND operator 63 outputs a logical AND of the gate signal G4 and the third mode signal SC.

The logical AND operator 65 outputs a logical AND of the gate signal G4 and the second mode signal SB. The logical AND operator 66 outputs a logical AND of the gate signal G1 and the third mode signal SC. The logical OR circuit 67 outputs a logical OR of outputs of the logical AND operators 61 to 63. The logical OR circuit 68 outputs a logical OR of outputs of the logical AND operators 64 to 66.

In the first control mode, the logical values of the first to third mode signals SA to SC are respectively "1," "0," and "0." Hence, the U-phase signal output unit 31B outputs signals equivalent to the gate signal G1 as the gate signals G1u and G3u, and outputs a signal equivalent to the gate signal G4 as the gate signal G2u.

In the second control mode, the logical values of the first to third mode signals SA to SC are respectively "0," "1," and "0." Hence, the U-phase signal output unit 31B outputs a signal equivalent to the gate signal G1 as the gate signal Glu, and outputs signals equivalent to the gate signal G4 as the gate signals G2u and G3u.

In the third control mode, the logical values of the first to third mode signals SA to SC are respectively "0," "0," and "1." Hence, the U-phase signal output unit 31B outputs a signal equivalent to the gate signal G1 as the gate signal G3u, and outputs signals equivalent to the gate signal G4 as the gate signals G1u and G2u.

The V-phase signal output unit 32B has a configuration similar to the U-phase signal output unit 31B. The V-phase signal output unit 32B outputs signals equivalent to the gate signal G2 as the gate signals G1v and G3v, and outputs a signal equivalent to the gate signal G5 as the gate signal G2v in the first control mode. Also, the V-phase signal output unit 32B outputs a signal equivalent to the gate signal G2 as the gate signal G1v, and outputs signals equivalent to the gate signal G5 as the gate signals G2v and G3v in the second control mode. Also, the V-phase signal output unit 32B outputs a signal equivalent to the gate signal G2 as the gate signal G3v, and outputs signals equivalent to the gate signal G5 as the gate signals G1v and G2v in the third control mode.

The W-phase signal output unit 33B has a configuration similar to the U-phase signal output unit 31B. The W-phase signal output unit 33B outputs signals equivalent to the gate signal G3 as the gate signals G1w and G3w, and outputs a signal equivalent to the gate signal G6 as the gate signal G2w in the first control mode. Also, the W-phase signal output unit 33B outputs a signal equivalent to the gate signal G3 as the gate signal G1w, and outputs signals equivalent to the gate signal G6 as the gate signals G2w and G3w in the second control mode. Also, the W-phase signal output unit 33B outputs a signal equivalent to the gate signal G3 as the gate signal G3w, and outputs signals equivalent to the gate signal G6 as the gate signals G1w and G2w in the third control mode. In Fig. 21, reference signs A to D, and F1 to F3 are added to terminals of each of the U-phase signal output unit 31B, the V-phase signal output unit 32B, and the W-phase signal output unit 33B to indicate that the V-phase signal output unit 32B and the W-phase signal output unit 33B each have the relationship of functions and terminals equivalent to that of the U-phase signal output unit 31B.

As described above, the motor driving system 1B according to the third embodiment includes the motor 3B having the first and second three-phase windings 5B and 6B, the numbers of windings being different from each other. The controller 20B selects a supply target of AC power per phase based on the speed of the motor 3B. That is, the controller 20B sets the supply target(s) of AC power at the first and second three-phase windings 5B and 6B in the first control mode, at the first three-phase winding 5B in the second control mode, and at the second three-phase winding 6B in the third control mode. Accordingly, in the current source inverter device 2B, the induced voltage generated in the motor 3B can be reduced by two steps, and the speed control range can be further expanded.

### 4. Fourth Embodiment

Next, a current source inverter device according to a fourth embodiment is described. The current source inverter devices 2, 2A, and 2B according to the first to third embodiments operate the motors 3 and 3B each having two windings per phase. However, the current source inverter device according to the fourth embodiment operates a motor having four windings per phase. In the following description, points different from the motor driving system 1 according to the first embodiment are mainly described, and components having similar functions to those of the first embodiment are given with the same reference signs and redundant description is omitted.

4.1. Motor Driving System

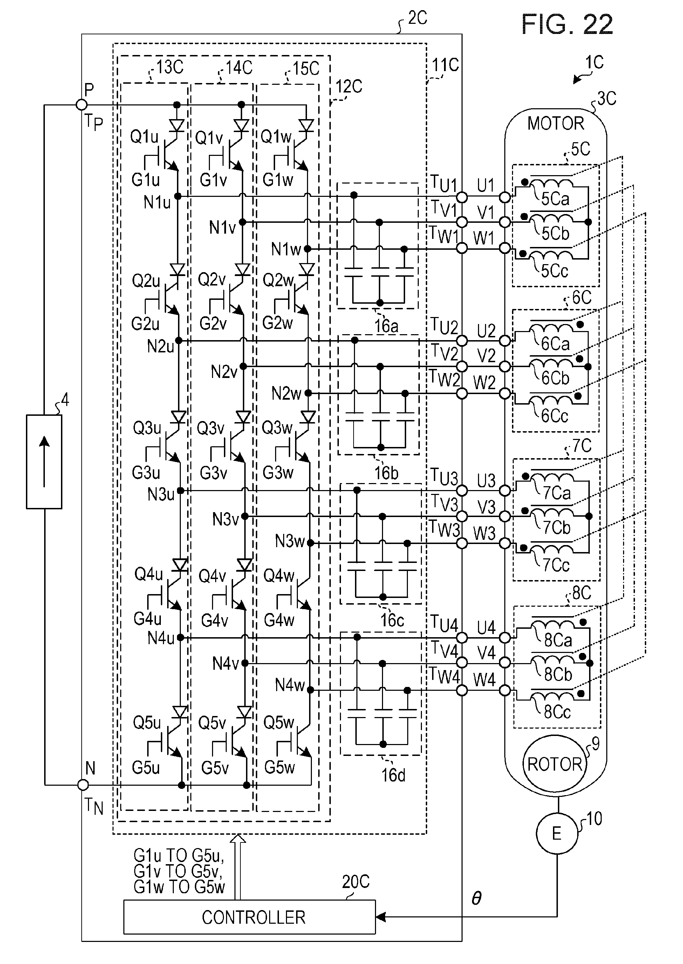

Fig. 22 is a configuration diagram of a motor driving system according to the fourth embodiment. As shown in Fig. 22, a motor driving system 1C according to the fourth embodiment includes a current source inverter device 2C, a motor 3C, and a DC source 4.

The motor 3C is a three-phase quadruple-winding motor formed of quadruple windings in which stator windings are insulated from each other, and has first to fourth three-phase windings 5C to 8C. The three-phase windings 5C to 8C have the same number of windings. However, the numbers of windings may be different from each other like the motor 3B according to the third embodiment.

Respective windings 5Ca, 5Cb, and 5Cc of the first three-phase winging 5C and respective windings 7Ca, 7Cb, and 7Cc of the third three-phase winding 7C have the same polarity. Respective windings 6Ca, 6Cb, and 6Cc of the second three-phase winging 6C and respective windings 8Ca, 8Cb, and 8Cc of the fourth three-phase winding 8C have the same polarity. To be specific, the four windings corresponding to each phase of the motor 3C are inserted into the same slot of the stator, are electromagnetically densely coupled to each other, and have winding directions with alternately reversed polarities. In Fig. 22, black dots show the polarities of the winding directions.

The current source inverter device 2C includes terminals $T_{U1}$, $T_{U2}$, $T_{V1}$, $T_{V2}$, $T_{W1}$, $T_{W2}$, $T_{U3}$, $T_{U4}$, $T_{V3}$, $T_{V4}$, $T_{W3}$, and $T_{W4}$, an inverter 11C, and a controller 20C.

The terminals $T_{U1}$, $T_{V1}$, and $T_{W1}$ are connected with the first three-phase winding 5C included in the motor 3C. The terminals $T_{U2}$, $T_{V2}$, and $T_{W2}$ are connected with the second three-phase winding 6C included in the motor 3C.

Also, the terminals $T_{U3}$, $T_{V3}$, and $T_{W3}$ are connected with the third three-phase winding 7C included in the motor 3C. The terminals $T_{U4}$, $T_{V4}$, and $T_{W4}$ are connected with the fourth three-phase winding 8C included in the motor 3C.

The inverter 11C includes a switching element unit 12C, and filters 16a to 16d. The switching element unit 12C includes switching element units 13C to 15C. The switching element unit 13C is provided for the U-phase of the motor 3C. The switching element unit 14C is provided for the V-phase of the motor 3C. The switching element unit 15C is provided for the W-phase of the motor 3C.

The switching element units 13C to 15C each have five switching elements connected in series. To be specific, the switching element unit 13C is formed such that five switching elements Q1u to Q5u are connected in series. The switching element unit 14C is formed such that five switching elements Q1v to Q5v are connected in series. Also, the switching element unit 15C is formed such that five switching elements Q1w to Q5w are connected in series.

The switching elements Q4u, Q5u, Q4v, Q5v, Q4w, and Q5w have configurations similar to the switching element Q1u or the like. Hereinafter, these switching elements may be occasionally collectively called switching element Qs.

The switching element units 13C to 15C each have four nodes among the switching elements Qs, and the four nodes are respectively connected with different four windings with the same phase of the motor 3C. To be specific, regarding the switching element unit 13C, nodes N1u, N2u, N3u, and N4u are respectively connected with a U1-phase, a U2-phase, a U3-phase, and a U4-phase of the motor 3C. Regarding the switching element unit 14C, nodes N1v, N2v, N3v, and N4v are respectively connected with a V1-phase, a V2-phase, a V3-phase, and a V4-phase of the motor 3C. Regarding the switching element unit 15C, nodes N1w, N2w, N3w, and N4w are respectively connected with a W1-phase, a W2-phase, a W3-phase, and a W4-phase of the motor 3C.

The filter 16a and the filter 16b have configurations similar to the first embodiment. One ends of capacitors of the filter 16c are respectively connected with the terminals $T_{U3}$, $T_{V3}$, and $T_{W3}$, and the other ends of the capacitors are commonly connected. One ends of capacitors of the filter 16d are respectively connected with the terminals $T_{U4}$, $T_{V4}$, and $T_{W4}$, and the other ends of the capacitors are commonly connected. With the filters 16a to 16d, high-frequency components of current output from the switching element units 13C to 15C of respective phases are removed.

4.2. Controller 20C

The controller 20C generates a gate signal in a control mode corresponding to the rotation speed of the motor 3C among first to fourth control modes, and outputs the gate signal to the inverter 11C. The controller 20C supplies AC power to four windings per phase of the motor 3C in the first control mode, and supplies AC power to three windings per phase of the motor 3C in the second control mode. The controller 20C supplies AC power to two windings per phase of the motor 3C in the third control mode, and supplies AC power to one winding per phase of the motor 3C in the fourth control mode.

The controller 20C switches the control mode from the first control mode to the second control mode, the third control mode, and then the fourth control mode as the rotation speed of the motor 3C increases, and thus executes switching for reducing the induced voltage of the motor 3C. Accordingly, the current source inverter device 2C can expand the speed control range.

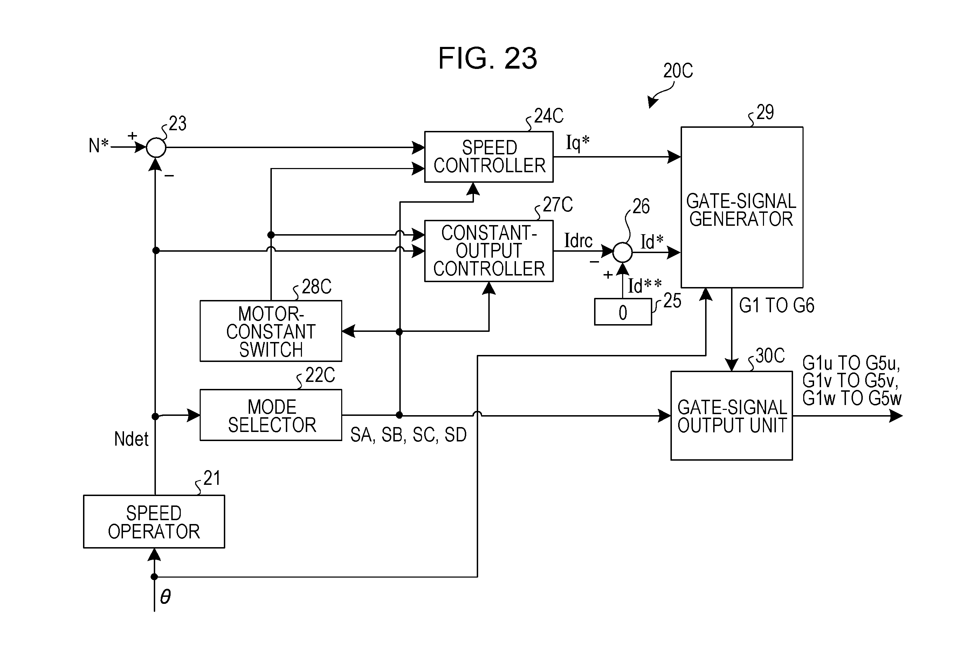

Fig. 23 is an illustration showing a configuration example of the controller 20C. As shown in Fig. 23, the controller 20C includes a speed operator 21, a mode selector 22C (example of selector and first selection command unit), a subtracter 23, a speed controller 24C, a d-axis current command generator 25, a subtracter 26, a constant-output controller 27C, a motor-constant switch 28C, a gate-signal generator 29, and a gate-signal output unit 30C. Hereinafter, the mode selector 22C, the speed controller 24C, the constant-output controller 27C, the motor-constant switch 28C, and the gate-signal output unit 30C are specifically described.

4.2.1. Mode Selector 22C

The mode selector 22C selects one control mode from the first to fourth control modes based on a rotation speed Ndet and set values Ns1, Ns2, and Ns3. To be specific, the mode selector 22C selects the first control mode if Ndet

< Ns1, and selects the second control mode if No1 ≤ Ndet <

Ns2. Also, the mode selector 22C selects the third control mode if Ns2 ≤ Ndet < Ns3, and selects the fourth control mode if Ns3 ≤ Ndet.

Information indicative of the first control mode is, for example, a first mode signal SA with a logical value being "1," and second to fourth mode signals SB, SC, and SD with logical values being "0." Also, information indicative of the second control mode is, for example, the second mode signal SB with a logical value being "1" and the first, third, and fourth mode signals SA, SC, and SD with logical values being "0." Also, information indicative of the third control mode is, for example, the third mode signal SC with a logical value being "1" and the first, second, and fourth mode signals SA, SB, and SD with logical values being "1." Also, information indicative of the fourth control mode is, for example, the fourth mode signal SD with a logical value being "1" and the first to third mode signals SA, SB, and SC with logical values being "1."

The first to fourth mode signals SA, SB, SC, and SD are each merely an example of information of a control mode, and hence the information is not limited to these signals. Hereinafter, the first to fourth mode signals SA, SB, SC, and SD are collectively written as mode signal SX3.

In the example of the mode selector 22C shown in Fig. 23, the control mode is selected based on the rotation speed Ndet. However, the control mode does not have to be selected based on the rotation speed Ndet, as long as the control mode is selected in accordance with speed information of the motor 3C similarly to the mode selector 22.

4.2.2. Speed Controller 24C

The speed controller 24C generates a q-axis current command Iq* so that the difference between a speed command N* and the rotation speed Ndet becomes zero, and outputs the q-axis current command Iq* to the gate-signal generator 29. The speed controller 24C holds the q-axis current command Iq* constant similarly to the speed controller 24 if field weakening control is executed by the constant-output controller 27C. Also, the speed controller 24C can control q-axis current (torque current) so that output effective power Pe is not changed before and after the switching of the control mode similarly to the speed controller 24.

4.2.3. Constant-output Controller 27C

The constant-output controller 27C generates a field weakening current command value Idrc corresponding to the rotation speed Ndet from the speed operator 21 and the logical value of the mode signal SX3 from the mode selector 22C, and outputs the field weakening current command value Idrc to the subtracter 26. For example, the constant-output controller 27C sets the field weakening current command value Idrc at substantially zero at the switching from the first control mode to the second control mode, at the switching from the second control mode to the third control mode, and at the switching from the third control mode to the fourth control mode. The constant-output controller 27C changes the field weakening current command value Idrc in a direction in which the field of the motor 3C is weakened in accordance with an increase in rotation speed Ndet.

4.2.4. Motor-constant Switch 28C

The motor-constant switch 28C selects a motor constant of a corresponding control mode among motor constants for the first to fourth control modes, in accordance with the mode signal SX3 from the mode selector 22C, and outputs the motor constant to the speed controller 24C and the constant-output controller 27C. Accordingly, information of the motor constant used for generation of the q-axis current command Iq* in the speed controller 24C and generation of the field weakening current command value Idrc in the constant-output controller 27C can be properly switched.

4.2.5. Gate-signal Output Unit 30C

The gate-signal output unit 30C generates gate signals G1u to G5u, G1v to G5v, and G1w to G5w (hereinafter, occasionally collectively called gate signal Gs) for driving the switching element Qs of the inverter 11C in accordance with the mode signal SX3 from the mode selector 22C. The gate signals G1u to G5u, G1v to G5v, and G1w to G5w respectively drive the switching elements Q1u to Q5u, Q1v to Q5v, and Q1w to Q5w.

When the first control mode is selected by the mode selector 22C, the gate-signal output unit 30C generates the gate signal Gs for supplying AC power in series from the inverter 11C to each of the first to fourth three-phase windings 5C to 8C, and outputs the gate signal Gs to the inverter 11C.

In the first control mode, the upper-middle and lower-middle switching elements Q2u, Q2v, Q2w, Q4u, Q4v, and Q4w are driven by the corresponding gate signals G4, G5, and G6, and the other switching elements Qs are driven by the corresponding gate signals G1, G2, and G3. Accordingly, AC power is supplied from the inverter 11C to the first to fourth three-phase windings 5C to 8C. For example, when the current Iuv is applied in the first control mode, the gate-signal output unit 30C outputs the gate signals G1u, G2v, G3u, G4v, and G5u with logical values being "1," and outputs the other gate signals Gs with logical values being "0."

Also, in the second control mode, the upper-middle, lower-middle, and lowermost switching elements Q2u, Q2v, Q2w, Q4u, Q4v, Q4w, Q5u, Q5v, and Q5w are driven by the corresponding gate signals G4, G5, and G6, and the other switching elements Qs are driven by the corresponding gate signals G1, G2, and G3. Accordingly, AC power is supplied from the inverter 11C only to the first to third three-phase windings 5C to 7C. For example, when the current Iuv is applied in the second control mode, the gate-signal output unit 30C outputs the gate signals G1u, G2v, G3u, G4v, and G5v with logical values being "1," and outputs the other gate signals Gs with logical values being "0."

Also, in the third control mode, the upper-middle switching elements Q2u, Q2v, and Q2w are driven by the corresponding gate signals G4, G5, and G6, and the other switching elements Qs are driven by the corresponding gate signals G1, G2, and G3. Accordingly, AC power is supplied from the inverter 11C only to the first and second three-phase windings 5C and 6C. For example, when the current Iuv is applied in the third control mode, the gate-signal output unit 30C outputs the gate signals G1u, G2v, and G3u to G5u with logical values being "1," and outputs the other gate signals Gs with logical values being "0."

In the fourth control mode, the uppermost switching elements Q1u, Q1v, and Q1w are driven by the corresponding gate signals G1, G2, and G3, and the other switching elements Qs are driven by the corresponding gate signals G4, G5, and G6. Accordingly, AC power is supplied from the inverter 11C only to the first three-phase winding 5C. For example, when the current Iuv is applied in the fourth control mode, the gate-signal output unit 30C outputs the gate signals G1u, and G2v to G5v with logical values being "1," and outputs the other gate signals Gs with logical values being "0."

It is to be noted that the configuration of the gate-signal output unit 30C is not limited to the above-described configuration as long as the gate-signal output unit 30C can supply AC power individually to windings in accordance with the control mode. For example, the gate-signal output unit 30C may cause the switching elements Q1u to Q4u, Q1v to Q4v, and Q1w to Q4w except the lowermost switching elements to be driven by the corresponding gate signals G1, G2, and G3, and the lowermost switching elements Q5u, Q5v, and Q5w may be driven by the corresponding gate signals G4, G5, and G6.

As described above, the current source inverter device 2C switches the control mode from the first control mode to the second control mode, the third control mode, and then the fourth control mode as the rotation speed of the motor 3C increases, and thus executes switching for reducing the induced voltage of the motor 3C. Accordingly, the current source inverter device 2C can expand the speed control range.

If a switching unit is formed by connecting a number n+1 (n being an integer of 2 or greater) of switching elements Qs in series per phase, a motor having a number m of windings per phase can be controlled. The control target is not limited to the motor 3, 3C having two or four windings per phase, and the control target may be a motor having three, or five or more windings per phase.

5. Fifth Embodiment

Next, a current source inverter device according to a fifth embodiment is described. The current source inverter devices 2, and 2A to 2C according to the above-described embodiments operate the motors 3, 3B, and 3C each having a number m (m being an integer of 2 or greater) of windings per phase. However, the current source inverter device according to the fifth embodiment operates a number n (n being an integer of 2 or greater) of motors each having the number m of windings per phase. In the following description, points different from the motor driving system 1C according to the fourth embodiment are mainly described based on m = 4 and n = 2, and components having similar functions to those of the fourth embodiment are given with the same reference signs and redundant description is omitted.

5.1. Motor Driving System

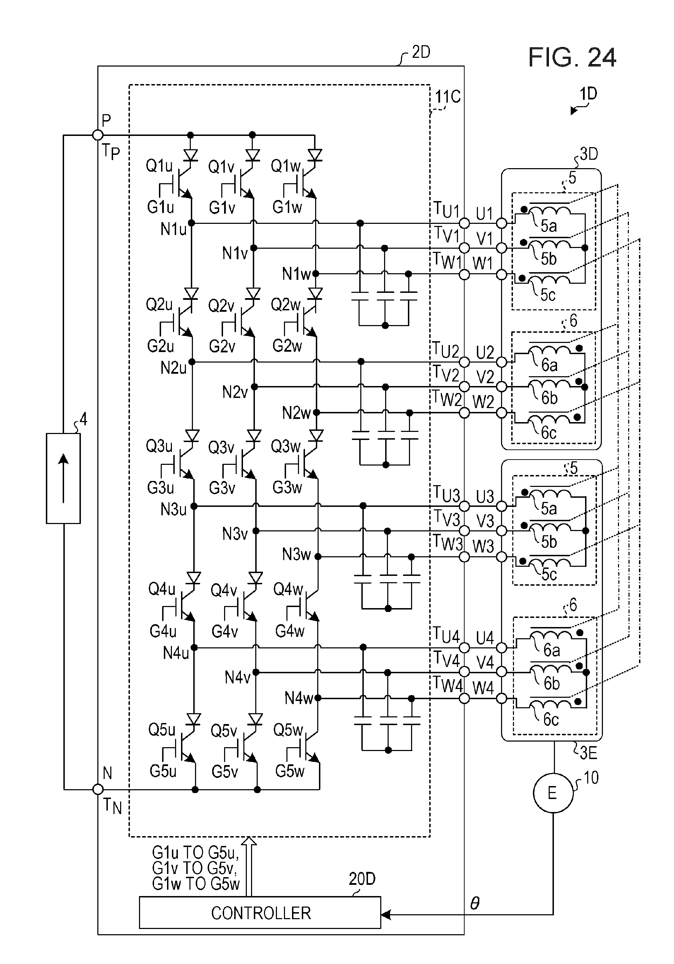

Fig. 24 is a configuration diagram of a motor driving system according to the fifth embodiment. As shown in Fig. 24, a motor driving system 1D according to the fifth embodiment includes a current source inverter device 2D, motors 3D and 3E, and a DC source 4. The motors 3D and 3E each have a configuration similar to the motor 3. Also, in the example shown in Fig. 24, a position sensor 10 detects the rotation speed of the motor 3E; however, may detect the rotation speed of the motor 3D.

The current source inverter device 2D synchronizes the two motors 3D and 3E at the same speed and controls the motors 3D and 3E. Control of the motors 3D and 3E by the current source inverter device 2D is similar to the control of the motor 3 by the current source inverter device 2.

An inverter 11C and a controller 20D are provided. The inverter 11C has a configuration similar to the inverter 11C according to the fourth embodiment. The controller 20D controls the inverter 11C in one operation mode of first and second control modes.

5.2. Controller

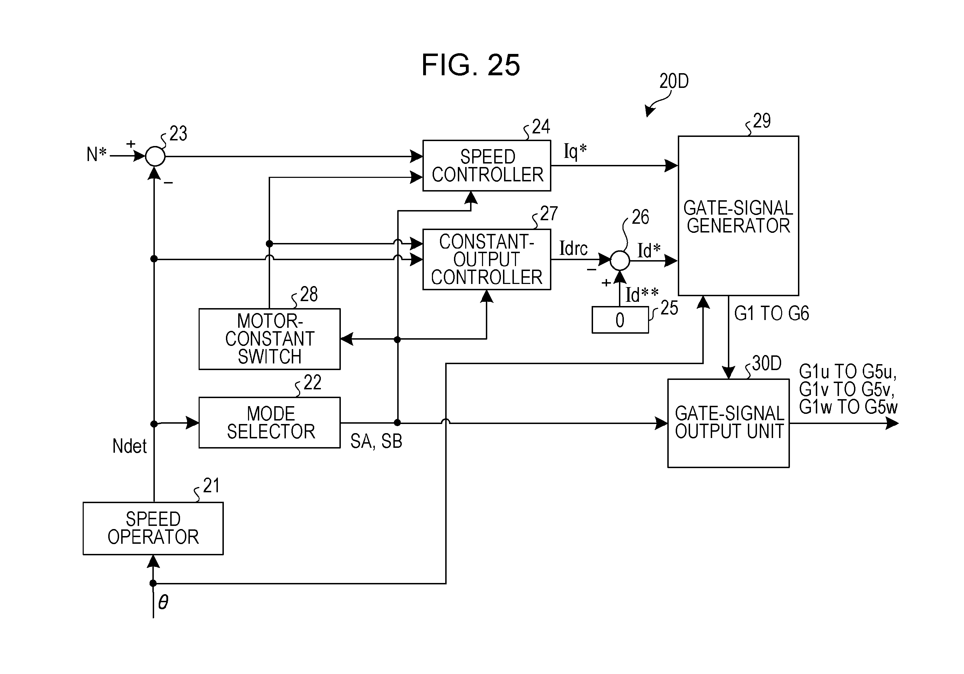

Fig. 25 is an illustration showing a configuration example of the controller 20D. As shown in Fig. 25, the controller 20D includes a speed operator 21, a mode selector 22 (example of selector and first selection command unit), a subtracter 23, a speed controller 24, a d-axis current command generator 25, a subtracter 26, a constant-output controller 27, a motor-constant switch 28, a gate-signal generator 29, and a gate-signal output unit 30D.

When the first control mode is selected by the mode selector 22, the gate-signal output unit 30D generates the gate signal Gs for supplying AC power in series from the inverter 11C to three-phase windings 5 and 6 of each of the two motors 3D and 3E, and outputs the gate signal Gs to the inverter 11C.

In the first control mode, the upper-middle and lower-middle switching elements Q2u, Q2v, Q2w, Q4u, Q4v, and Q4w are driven by the corresponding gate signals G4, G5, and G6, and the other switching elements Qs are driven by the corresponding gate signals G1, G2, and G3. Accordingly, AC power is supplied from the inverter 11C to the two three-phase windings 5 and 6 of each of the motors 3D and 3E. For example, when current Iuv is applied in the first control mode, the gate-signal output unit 30D outputs the gate signals G1u, G2v, G3u, G4v, and G5u with logical values being "1," and outputs the other gate signals Gs with logical values being "0."

Also, in the second control mode, the upper-middle and middle switching elements Q2u, Q2v, Q2w, Q3u, Q3v, and Q3w are driven by the corresponding gate signals G4, G5, and G6, and the other switching elements Qs are driven by the corresponding gate signals G1, G2, and G3. Accordingly, AC power is supplied from the inverter 11C only to the three-phase windings 5 of the motors 3D and 3E. For example, when the current Iuv is applied in the third control mode, the gate-signal output unit 30D outputs the gate signals G1u, G2v, G3v, G4u, and G5u with logical values being "1," and outputs the other gate signals Gs with logical values being "0."

The gate-signal output unit 30D may also generate the gate signals G1u to G5u, G1v to G5v, and G1w to G5w to supply AC power from the inverter 11C only to the second three-phase windings 6 of the motors 3D and 3E in the second control mode.

As described above, the current source inverter device 2D according to the fifth embodiment can expand the speed control range while operating the two motors 3D and 3E each having two windings per phase. If a switching unit is formed by connecting a number nxm+1 (n, m each being integers of 2 or greater) of switching elements in series, a number n of motors each having a number m of windings per phase can be controlled. The control target is not limited to the two motors 3D and 3E each having the two windings per phase.

In the motor driving system 1D according to the fifth embodiment, the current source inverter device 2D may alternately switch the three-phase windings, as a supply target of AC power, between the three-phase windings of the motor 3D and the three-phase windings of the motor 3E every predetermined period. Accordingly, the current and torque of the two motors 3D and 3E can be balanced. By increasing or decreasing the number of three-phase windings to be selected as the supply target of AC power, torque control and speed control in wide ranges can be executed.

For example, in the motor driving system 1D according to the fifth embodiment, the current source inverter device 2D may alternately switch a combination of three three-phase windings as a supply target of AC power among different combinations of three-phase windings every predetermined period. For example, the controller 20D supplies AC power to the first and second three-phase windings 5 and 6 of the motor 3D and the first three-phase winding 5 of the motor 3E in the first control mode, and the controller 20D supplies AC power to the first three-phase winding 5 of the motor 3D and the first and second three-phase windings 5 and 6 of the motor 3E in the second control mode. The controller 20D alternately switches the control mode between the first control mode and the second control mode every predetermined period, so as to equalize average currents and average torques applied to the two motors 3D and 3E. In this case, in the controller 20D, the gate-signal output unit 30D switches a combination of three three-phase windings among different combinations as a supply target of AC power in accordance with the control mode. Also, in the controller 20D, the mode selector 22 outputs the first mode signal SA and the second mode signal SB with the ON ratio of 50%.

Also, in the motor driving system 1D according to the fifth embodiment, the current source inverter device 2D may alternately switch a motor as a supply target of AC power between the motor 3D and the motor 3E every predetermined period. For example, the controller 20D supplies AC power to the first and second three-phase windings 5 and 6 of the motor 3D in the first control mode, and the controller 20D supplies AC power to the first and second three-phase windings 5 and 6 of the motor 3E in the second control mode. The controller 20D alternately switches the control mode between the first control mode and the second control mode every predetermined period, so as to equalize average currents and average torques applied to the two motors 3D and 3E. In this case, in the controller 20D, the gate-signal output unit 30D switches a motor between the motor 3D and the motor 3E as a supply target of AC power in accordance with the control mode. Also, in the controller 20D, the mode selector 22 outputs the first mode signal SA and the second mode signal SB with the ON ratio of 50%.

Also, in the motor driving system 1D according to the fifth embodiment, the current source inverter device 2D may alternately switch a motor as a supply target of AC power between a single three-phase winding of the motor 3D and a single three-phase winding of the motor 3E every predetermined period. For example, the controller 20D supplies AC power to the first three-phase winding 5 of the motor 3D in the first control mode, and the controller 20D supplies AC power to the first three-phase winding 5 of the motor 3E in the second control mode. The controller 20D alternately switches the control mode between the first control mode and the second control mode every predetermined period, so as to equalize average currents and average torques applied to the two motors 3D and 3E. In this case, in the controller 20D, the gate-signal output unit 30D switches a three-phase winding between a single three-phase winding of the motor 3D and a single three-phase winding of the motor 3E as a supply target of AC power in accordance with the control mode. Also, in the controller 20D, the mode selector 22 outputs the first mode signal SA and the second mode signal SB with the ON ratio of 50%.

In the above-described examples of the third to fifth embodiments, the change points from the current source inverter device 2 according to the first embodiment have been described. However, by performing similar processing as the processing of the current source inverter device 2A according to the second embodiment, the high efficiency region can be expanded.

Also, in the above description, the controllers 20, and 20A to 20D are each described as a unit that controls a motor 3 in a constant torque region and a constant output region. However, control only in the constant torque region can be performed. In this case, for example, the controllers 20, and 20A to 20D each may control the motor 3 according to a desired purpose of use including a large torque at low speed or when stopped and performance of highspeed operation.

Further advantages and modifications can be easily derived by those skilled in the art. Hence, a more broad aspect of the disclosure is not limited to the specific details and representative embodiments expressed and described above.

It should be understood by those skilled in the art that various modifications, combinations, sub-combinations and alterations may occur depending on design requirements and other factors insofar as they are within the scope of the appended claims or the equivalents thereof.

**Claims**

1. A current source inverter device (2) **characterized by** comprising:

an inverter (11) that supplies alternating-current power to a number n of alternating-current motors (3) each having a number m of windings per phase, the number m being an integer of 2 or greater, the number n being an integer of 1 or greater; and
a controller (20) that controls the inverter and the alternating-current motor,
wherein the inverter includes

a switching unit (12), in which a number nxm+1 of switching elements per phase of the alternating-current motor are connected in series, and a number nxm of nodes among the switching elements are respectively connected with a number nxm of different windings with the same phase among the windings of the number n of the alternating-current motors, and

wherein the controller includes

a mode selector (22) that selects at least one winding as a supply target of the alternating-current power from the number nxm of the windings based on a rotation speed of the alternating-current motor.

2. The current source inverter device according to claim 1, **characterized in that**

the mode selector includes

a first selection command unit that selects the supply target so that the number of the windings of the supply target or to be the supply target is increased or decreased in accordance with a change in the rotation speed of the alternating-current motor.

3. The current source inverter device according to claim 1 or 2, **characterized in that**

the mode selector includes

a second selection command unit that selects the supply target so that the number of the windings of the supply target or to be the supply target is changed every predetermined period with a time ratio corresponding to the rotation speed of the alternating-current motor.

4. The current source inverter device according to any of claims 1 to 3, **characterized in that**

the controller includes

a constant-output controller (27) that controls a field of the alternating-current motor when the number of the windings of the supply target or to be the supply target is changed in accordance with the rotation speed of the alternating-current motor.

5. The current source inverter device according to any of claims 1 to 4, **characterized in that**

the controller includes

a speed controller (24) that controls torque current of the alternating-current motor when the number of the windings of the supply target or to be the supply target is changed in accordance with the rotation speed of the alternating-current motor.

6. The current source inverter device according to claim 5, **characterized in that**

the speed controller controls

the torque current of the alternating-current motor so that the alternating-current power is not changed before and after the change in the number of the windings of the supply target or to be the supply target.

7. The current source inverter device according to any of claims 1 to 6, **characterized in that**

the controller includes

a motor-constant switch (28) that switches a motor constant used for control of the alternating-current motor when the number of the windings of the supply target or to be the supply target is changed in accordance with the rotation speed of the alternating-current motor.

# FIG. 1

# FIG. 2

FIG. 3

# FIG. 4

# FIG. 5

## FIG. 6

| CURRENT VECTOR | CURRENT PATH | DRIVING SIGNAL | | | | | |
|---|---|---|---|---|---|---|---|
| | | G1 | G2 | G3 | G4 | G5 | G6 |
| Iuv | Qpu → Qnv | 1 | 0 | 0 | 0 | 1 | 0 |
| Iuw | Qpu → Qnw | 1 | 0 | 0 | 0 | 0 | 1 |
| Ivw | Qpv → Qnw | 0 | 1 | 0 | 0 | 0 | 1 |
| Ivu | Qpv → Qnu | 0 | 1 | 0 | 1 | 0 | 0 |
| Iwu | Qpw → Qnu | 0 | 0 | 1 | 1 | 0 | 0 |
| Iwv | Qpw → Qnv | 0 | 0 | 1 | 0 | 1 | 0 |
| Iuu | Qpu → Qnu | 1 | 0 | 0 | 1 | 0 | 0 |
| Ivv | Qpv → Qnv | 0 | 1 | 0 | 0 | 1 | 0 |
| Iww | Qpw → Qnw | 0 | 0 | 1 | 0 | 0 | 1 |

EP 2 860 861 A2

# FIG. 7

GATE-SIGNAL OUTPUT UNIT ⌐30

┌ 31
U-PHASE SIGNAL OUTPUT UNIT

G1 ——○————○ C ● F1 ○——→ G1u

G4 ——○————○ D F2 ○——→ G2u

SA ——○————○ A ⌐41 43 F3 ○——→ G3u

SB ——○————○ B 42

┌ 32
G2 ——○————○ C F1 ○——→ G1v
G5 ——○————○ D V-PHASE SIGNAL F2 ○——→ G2v
○ A OUTPUT UNIT F3 ○——→ G3v
○ B

┌ 33
G3 ——○————○ C F1 ○——→ G1w
G6 ——○————○ D W-PHASE SIGNAL F2 ○——→ G2w
○ A OUTPUT UNIT F3 ○——→ G3w
○ B

# FIG. 8

⌐ 31, 32, 33
U-PHASE SIGNAL OUTPUT UNIT

SA ○ A ⌐44 46

SB ○ B 45 F1 ○ G1u

G1 ○ C F2 ○ G2u

G4 ○ D F3 ○ G3u

# FIG. 9

# FIG. 10

# FIG. 11

COMPOSITE CURRENT
IN FIRST CONTROL MODE

EP 2 860 861 A2

# FIG. 12

# FIG. 13

EP 2 860 861 A2

# FIG. 14

MODE SELECTOR ⌐22A

Ndet →

MODULATION-SIGNAL GENERATOR ⌐52

CARRIER-SIGNAL GENERATOR ⌐51

Sm

Sc

⌐53

⌐54

→ SB

→ SA

# FIG. 15

ROTATION SPEED Ndet [rad/s]

## FIG. 16

## FIG. 17

# FIG. 18

# FIG. 19

FIG. 20

# FIG. 21

FIG. 22

## FIG. 23

EP 2 860 861 A2

FIG. 24

# FIG. 25

G1u TO G5u,
G1v TO G5v,
G1w TO G5w

EP 2 860 861 A2

**EP 2 860 861 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3948009 B

- JP 2012196119 A